# EUROPEAN PATENT SPECIFICATION

(11) **EP 2 797 144 B1**
(45) Date of publication and mention of the grant of the patent: **15.02.2017**
(21) Application number: 12859694.7
(22) Date of filing: 05.12.2012
(51) Int. Cl.: H01M 4/13, H01M 4/134, H01M 4/36, H01M 4/38, H01M 4/48, H01M 4/62, H01M 4/66, H01M 10/0525, H01M 10/0566, H01M 4/02, H01M 4/1395

(54) **ACTIVE MATERIAL FOR SECONDARY BATTERIES, SECONDARY BATTERY, AND ELECTRONIC DEVICE**
AKTIVMATERIAL FÜR SEKUNDÄRBATTERIEN, SEKUNDÄRBATTERIE UND ELEKTRONISCHE VORRICHTUNG
MATÉRIAU ACTIF POUR BATTERIES SECONDAIRES, BATTERIE SECONDAIRE, ET DISPOSITIF ÉLECTRONIQUE

(30) Priority: 20.12.2011 JP 2011278527
(43) Date of publication of application: 29.10.2014
(73) Proprietor: Sony Corporation, Tokyo 108-0075 (JP)
(72) Inventor: HIROSE Takakazu, Koriyama-shi Fukushima 963-0531 (JP); KAWASE Kenichi, Koriyama-shi Fukushima 963-0531 (JP); SHIMOI Norihiro, Koriyama-shi Fukushima 963-0531 (JP); TANAKA Shinji, Tokyo 108-0075 (JP)
(74) Representative: Müller Hoffmann & Partner
(86) International application number: PCT/JP2012/081479
(87) International publication number: WO 2013/094404

(56) References cited:
- EP-A1- 2 343 758
- EP-A2- 1 363 341
- JP-A- 2004 119 176
- JP-A- 2004 327 190
- JP-A- 2005 085 717
- JP-A- 2006 196 447
- JP-A- 2007 242 590
- JP-A- 2009 205 950
- JP-A- 2011 233 497
- JP-A- 2011 238 585
- US-A1- 2005 233 213
- CHAN C K ET AL: "Surface chemistry and morphology of the solid electrolyte interphase on silicon nanowire lithium-ion battery anodes", JOURNAL OF POWER SOURCES, ELSEVIER SA, CH, vol. 189, no. 2, 15 April 2009 (2009-04-15), pages 1132-1140, XP026027611, ISSN: 0378-7753, DOI: 10.1016/J.JPOWSOUR.2009.01.007 [retrieved on 2009-01-19]

## Description

### TECHNICAL FIELD

The present technology relates to a secondary battery-use active material capable of inserting and extracting lithium ions, to a secondary battery using the secondary battery-use active material, and to an electronic apparatus using the secondary battery.

### BACKGROUND ART

In recent years, various electronic apparatuses such as a mobile phone and a personal digital assistant (PDA) have been widely used, and it has been strongly desired to further reduce the size and the weight of the electronic apparatuses and to achieve their long lives. Accordingly, as an electric power source for the electronic apparatuses, a battery, in particular, a small and light-weight secondary battery capable of providing high energy density has been developed. In these days, it has been considered to apply such a secondary battery not only to the foregoing electronic apparatuses, but also to various applications represented by a battery pack as an attachable and detachable electric power source, an electric vehicle such as an electric automobile, an electric power storage system such as a home electric power server, and an electric power tool such as an electric drill.

Secondary batteries utilizing various charge and discharge principles have been widely proposed. In particular, a secondary battery utilizing insertion and extraction of lithium ions or the like has attracted attention, since such a secondary battery provides higher energy density than a lead battery, a nickel-cadmium battery, and the like.

The secondary battery includes a cathode, an anode, and an electrolytic solution. The anode contains an anode active material capable of inserting and extracting lithium ions or the like. As the anode active material, carbon materials such as graphite have been widely used. Recently, since it has been desired to further improve the battery capacity, using Si has been considered. One reason for this is that, the theoretical capacity of Si (4199 mAh/g) is significantly larger than the theoretical capacity of graphite (372 mAh/g), and therefore, the battery capacity is likely to be greatly improved thereby.

However, in the case where Si is used as an anode active material, the anode active material is intensely expanded and shrunk at the time of charge and discharge, and therefore, the anode active material is easily cracked mainly in the vicinity of the surface layer. In the case where the anode active material is cracked, a highly-reactive newly-formed surface (an active surface) is created, and therefore, the surface area (the reactive area) of the anode active material is increased. Thereby, a decomposition reaction of an electrolytic solution occurs on the newly-formed surface, the electrolytic solution is consumed for forming a coat derived from the electrolytic solution on the newly-formed surface, and therefore, battery characteristics such as cycle characteristics are easily lowered.

Therefore, in order to improve battery characteristics such as cycle characteristics, various considerations have been made on configurations of secondary batteries.

Specifically, in order to improve cycle characteristics and safety, Si and amorphous SiO₂ are concurrently deposited with the use of a sputtering method (for example, see Patent Literature 1). In order to obtain a superior battery capacity and safe performance, an electron-conductive material layer (a carbon material) is provided on the surfaces of SiOₓ particles (for example, see Patent Literature 2). In order to improve high-rate charge-discharge characteristics and cycle characteristics, an anode active material layer in which Si and O are contained, and an oxygen ratio is large on the side close to an anode current collector is formed (for example, see Patent Literature 3). In order to improve cycle characteristics, an anode active material layer in which Si and O are contained, and the entire average oxygen content is equal to or less than 40 atomic percent, and the average oxygen content is large on the side close to an anode current collector is formed (for example, see Patent Literature 4). In this case, difference between the average oxygen content on the side close to the anode current collector and the average oxygen content on the side far from the anode current collector is from 4 atomic percent to 30 atomic percent both inclusive.

Further, in order to improve initial charge-discharge characteristics and the like, a nano-composite body containing an Si phase, SiO₂, and an MyO metal oxide is used (for example, see Patent Literature 5). In order to improve cycle characteristics, powder SiOₓ (0.8≤x≤1.5, grain diameter range: 1 µm to 50 µm both inclusive) and a carbonaceous material were mixed, and the resultant mixture is fired at 800 deg C to 1600 deg C both inclusive for 3 to 12 hours (for example, see Patent Literature 6). In order to shorten initial charging time, an anode active material represented by LiₐSiOₓ (0.5≤a-x≤1.1, 0.2≤x≤1.2) is used (for example, see Patent Literature 7). In this case, Li is evaporated on an active material precursor containing Si and O. In order to improve charge-discharge cycle characteristics, the composition of SiOₓ is controlled (for example, see Patent Literature 8). In this case, the molar ratio of the O amount with respect to the Si amount in an anode active material member is from 0.1 to 1.2 both inclusive, and a difference between the maximum value and the minimum value of the molar ratio of the O amount with respect to the Si amount in the vicinity of the interface between the anode active material member and a current collector is equal to or less than 0.4. In order to improve load characteristics, a lithium-containing porous metal oxide (LiₓSiO: 2.1≤x≤4) is used (for example, see Patent Literature 9).

Further, in order to improve charge-discharge cycle characteristics, a hydrophobized layer formed of a silane compound, a siloxane compound, or the like is formed on a thin film containing Si (for example, see Patent Literature 10). In order to improve cycle characteristics, electrically-conductive powder in which the surface of SiOₓ (0.5≤x<1.6) is covered with a graphite coat is used (for example, see Patent Literature 11). In this case, in Raman shift of Raman spectrum of the graphite coat, broad peaks are seen in 1330 cm⁻¹ and 1580 cm⁻¹, and the intensity ratio thereof I₁₃₃₀/I₁₅₈₀ is in the range of 1.5<I₁₃₃₀/I₁₅₈₀<3. In order to improve a battery capacity and cycle characteristics, powder containing 1 mass% to 30 mass% of particles having a structure in which microcrystal of Si (size of the crystal: 1 nm to 500 nm both inclusive) is dispersed in SiO₂ is used (for example, see Patent Literature 12). In this case, in particle size distribution measured by a laser diffraction scattering grain size distribution measurement method, the cumulative 90% diameter (D90) of the powder is equal to or less than 50 µm, and the grain diameter of each grain is less than 2 µm. In order to improve cycle characteristics, SiOₓ (0.3≤x≤1.6) is used, and an electrode unit is applied with a pressure equal to or larger than 3 kgf/cm² at the time of charge and discharge (for example, see Patent Literature 13). In order to improve overcharge characteristics, overdischarge characteristics, and the like, an Si oxide in which atomicity ratio between Si and O is 1:y (0<y<2) is used (for example, see Patent Literature 14).

In addition thereto, in order to accumulate or extract a large amount of lithium ions electrochemically, an amorphous metal oxide is provided on the surface of primary particles such as Si (for example, see Patent Literature 15). The Gibbs free energy at the time of oxidizing a metal for forming the metal oxide is smaller than the Gibbs free energy at the time of oxidizing Si or the like. In order to improve charge-discharge cycle characteristics and the like, an anode active material having an alloy composition formed of two types of metals as a main component is used (for example, see Patent Literature 16). Out of the two types of metals, the first metal is a metal (such as Si) having characteristics inserting and extracting Li, and the second metal is a metal (such as Fe) having characteristics stabilizing shape change of the first metal at the time of inserting and extracting Li.

### Citation List

### Patent Literatures

Patent Literature 1: Japanese Unexamined Patent Application Publication No. 2001-185127
Patent Literature 2: Japanese Unexamined Patent Application Publication No. 2002-042806
Patent Literature 3: Japanese Unexamined Patent Application Publication No. 2006-164954
Patent Literature 4: Japanese Unexamined Patent Application Publication No. 2006-114454
Patent Literature 5: Japanese Unexamined Patent Application Publication No. 2009-070825
Patent Literature 6: Japanese Unexamined Patent Application Publication No. 2008-282819
Patent Literature 7: WO2007/010922
Patent Literature 8: Japanese Unexamined Patent Application Publication No. 2008-251369
Patent Literature 9: Japanese Unexamined Patent Application Publication No. 2008-177346
Patent Literature 10: Japanese Unexamined Patent Application Publication No. 2007-234255
Patent Literature 11: Japanese Unexamined Patent Application Publication No. 2009-212074
Patent Literature 12: Japanese Unexamined Patent Application Publication No. 2009-205950
Patent Literature 13: Japanese Unexamined Patent Application Publication No. 2009-076373
Patent Literature 14: Japanese Patent No. 2997741
Patent Literature 15: Japanese Unexamined Patent Application Publication No. 2009-164104
Patent Literature 16: Japanese Unexamined Patent Application Publication No. 2006-100244

EP 2 343 758 A1 teaches a lithium-ion secondary battery comprising a cathode, an anode, and an electrolytic solution, wherein the anode includes an anode active material layer including a plurality anode active material particles, the anode active material particles each include a core section and a coating section applied to a part or a whole of a surface of the core section, and the core section includes a silicon-based material (SiOx:0 ≤ x < 0.5) and the coating section includes an amorphous or low-crystalline silicon-based material (SiOy:0.5 ≤ y ≤ 1.8).

Chan C.K. et al. (Journal of Power Sources 189 (2009) 1132 - 1140)) relates to the surface chemistry and morphology of the solid electrolyte interphase on silicon nanowire lithium-ion battery anodes.

EP 1 363 341 A2 teaches a conductive silicon composite in which particles having a structure in which crystallites of silicon are dispersed in silicon dioxide are coated on their surfaces with carbon.

US 2005/0233213 A1 discloses a negative active material for a rechargeable lithium battery, which includes a silicon-based composite having a silicon oxide of the form SiOx where x ≤ 1.5 and at least one element selected from the group consisting of B, P, Li, Ge, Al, and V, and a carbonaceous material.

### SUMMARY OF INVENTION

Since high performance and multi-functions of the electronic apparatuses and the like have been increasingly achieved, and frequency in use of the electronic apparatuses and the like has been increased as well, secondary batteries tend to be frequently charged and discharged. Therefore, further improvement of the battery characteristics of the secondary batteries has been desired.

Therefore, it is desirable to provide a secondary battery-use active material, a secondary battery, and an electronic apparatus that are capable of obtaining superior battery characteristics. This has been achieved by the subject-matter of the independent claims.

A secondary battery-use active material according to an embodiment of the present technology includes: a core section capable of inserting and extracting lithium ions; and a low-crystalline or noncrystalline covering section provided in at least part of a surface of the core section. The core section includes Si and O as constituent elements, and an atom ratio x (O/Si) of O with respect to Si satisfies 0≤x<0.5. The covering section includes Si and O as constituent elements, and an atom ratio y (O/Si) of O with respect to Si satisfies 0.5≤y≤1.8. The covering section has voids, and a carbon-containing material is provided in at least part of the voids.

A secondary battery according to an embodiment of the present technology includes: a cathode; an anode including an active material; and an electrolytic solution, wherein the anode uses the secondary battery-use active material according to the above-described embodiment of the present technology. An electronic apparatus according to an embodiment of the present technology includes a secondary battery, wherein the secondary battery has a configuration similar to that of the secondary battery according to the above-described embodiment of the present technology.

Here, the term "low-crystalline" refers to a crystal state in which both a noncrystalline region and a crystal region (crystal grains) exist in the case where a cross section or a surface of the covering section is observed with the use of a high angle annular dark-field scanning transmission electron microscope (HAADF STEM) or the like. In contrast, the term "noncrystalline" is a synonym for a so-called "amorphous," and refers to a crystal state in which only a noncrystalline region exists and a crystal region does not exist in the case where the covering section is observed with the use of an HAADF STEM or the like. It is to be noted that the magnification ratio at the time of observation may be, for example, 1.2×10⁶.

According to the secondary battery-use active material and the secondary battery according to the embodiments of the present technology, the low-crystalline or noncrystalline covering section is provided on the surface of the core section, the core section and the covering section respectively have the foregoing compositions, and the carbon-containing material is provided in the voids of the covering section. Therefore, superior battery characteristics are obtainable. Further, in the electronic apparatus according to the embodiment of the present technology, similar effects are obtainable.

### BRIEF DESCRIPTION OF THE DRAWINGS

[FIG. 1] FIG. 1 is a cross-sectional view illustrating a configuration of an anode using a secondary battery-use active material according to an embodiment of the present technology.
[FIG. 2] FIG. 2 is a cross-sectional view schematically illustrating a configuration of an anode active material as the secondary battery-use active material according to the embodiment of the present technology.
[FIG. 3] FIG. 3 is an HAADF STEM photograph illustrating an enlarged cross-sectional configuration of an anode active material (a covering section: noncrystalline).
[FIG. 4] FIG. 4 is an HAADF STEM photograph illustrating an enlarged cross-sectional configuration of an anode active material (a covering section: low-crystalline).
[FIG. 5] FIG. 5 is another HAADF STEM photograph illustrating an enlarged cross-sectional configuration of the anode active material (the covering section: low-crystalline).
[FIG. 6] FIG. 6 is a HAADF STEM photograph illustrating an enlarged cross-sectional configuration of an anode active material (a covering section: noncrystalline).
[FIG. 7] FIG. 7 is a cross-sectional view illustrating a configuration of a secondary battery (square-type) according to an embodiment of the present technology.
[FIG. 8] FIG. 8 is a cross-sectional view taken along a line VIII-VIII of the secondary battery illustrated in FIG. 7.
[FIG. 9] FIG. 9 is a plan view schematically illustrating configurations of a cathode and an anode illustrated in FIG. 8.
[FIG. 10] FIG. 10 is a cross-sectional view illustrating a configuration of a secondary battery (cylindrical-type) according to an embodiment of the present technology.
[FIG. 11] FIG. 11 is a cross-sectional view illustrating an enlarged part of a spirally wound electrode body illustrated in FIG. 10.
[FIG. 12] FIG. 12 is an exploded perspective view illustrating a configuration of a secondary battery (laminated-film-type) according to an embodiment of the present technology.
[FIG. 13] FIG. 13 is a cross-sectional view taken along a line XIII-XIII of a spirally wound electrode body illustrated in FIG. 12.
[FIG. 14] FIG. 14 is a block diagram illustrating a configuration of an application example (a battery pack) of the secondary battery.
[FIG. 15] FIG. 15 is a block diagram illustrating a configuration of an application example (an electric vehicle) of the secondary battery.
[FIG. 16] FIG. 16 is a block diagram illustrating a configuration of an application example (an electric power storage system) of the secondary battery.
[FIG. 17] FIG. 17 is a block diagram illustrating a configuration of an application example (an electric power tool) of the secondary battery.

### MODE FOR CARRYING OUT THE INVENTION

An embodiment of the present technology will be described below in detail with reference to the drawings. The description will be given in the following order.
1. Secondary Battery-Use Active Material
2. Secondary Battery
   2-1. Square-Type
   2-2. Cylindrical-Type
   2-3. Laminated-Film-Type
3. Applications of Secondary Battery
   3-1. Battery Pack
   3-2. Electric Vehicle
   3-3. Electric Power Storage System
   3-4. Electric Power Tool

### <1. Secondary Battery-Use Active Material>

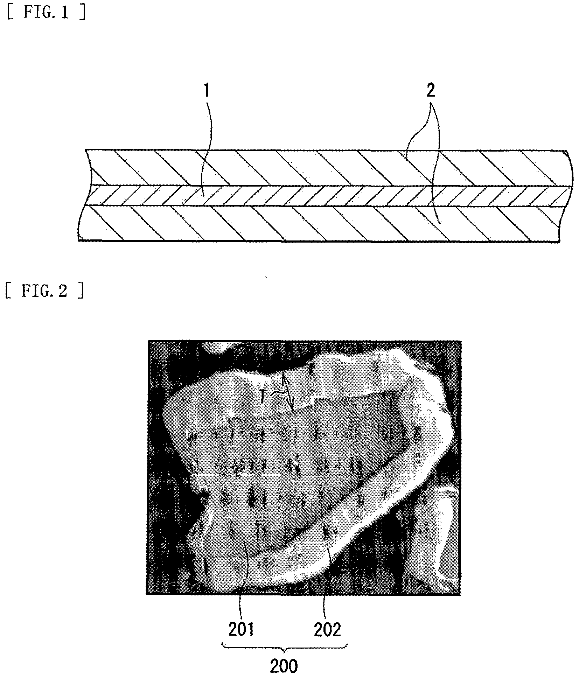

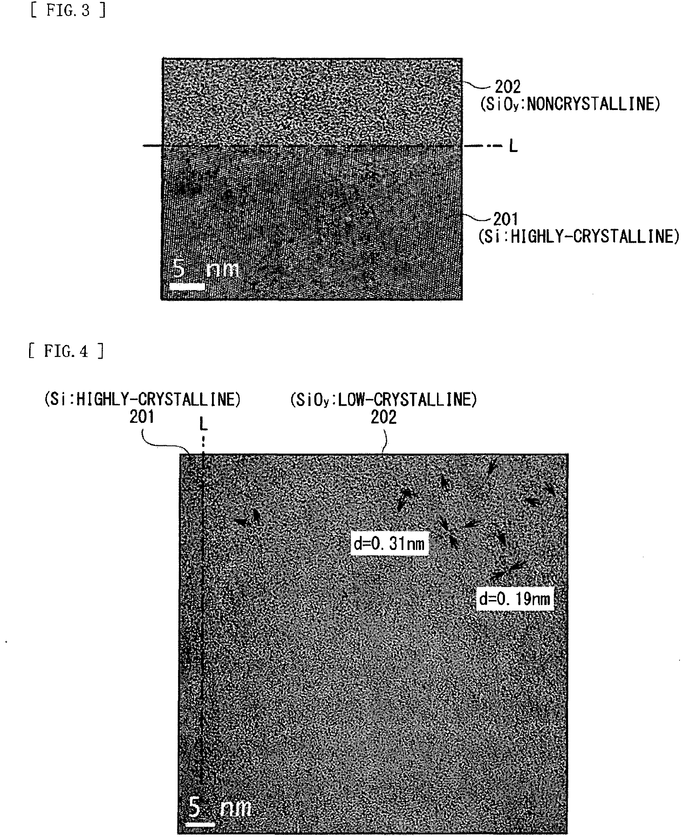

FIG. 1 illustrates a cross-sectional configuration of an anode using a secondary battery-use active material according to an embodiment of the present technology. FIG. 2 illustrates a cross-sectional configuration of an anode active material as the secondary battery-use active material according to the embodiment of the present technology. FIG. 3 to FIG. 6 are HAADF STEM photographs (hereinafter simply referred to as "TEM photographs") of cross-sectional structures of anode active materials.

### [Whole Configuration of Anode]

The anode may have, for example, as illustrated in FIG. 1, an anode active material layer 2 on an anode current collector 1. The anode active material layer 2 may be provided on both surfaces of the anode current collector 1, and may be provided only on a single surface thereof. However, the anode current collector 1 may be unnecessary.

### [Anode Current Collector]

The anode current collector 1 may be made, for example, of an electrically-conductive material having superior electrochemical stability, superior electric conductivity, and superior mechanical strength. The electrically-conductive material may be, for example, a metal material such as Cu, Ni, and stainless steel. In particular, a material that does not form an intermetallic compound with Li and that is alloyed with the anode active material layer 2 may be preferable.

The anode current collector 1 may preferably contain C and S as constituent elements. One reason for this is that, in this case, the physical strength of the anode current collector 1 is improved, and therefore, the anode current collector 1 is less likely to be deformed even when the anode active material layer 2 is expanded and shrunk at the time of charge and discharge. Such an anode current collector 1 may be, for example, a metal foil doped with C and S. Although the content of C and S is not particularly limited, in particular, the content thereof may be preferably equal to or less than 100 ppm, since thereby, a higher effect is obtained.

The surface (the surface in contact with the anode active material layer 2) of the anode current collector 1 may be roughened, or may not be roughened. Examples of the anode current collector 1 not roughened may include a rolled metal foil. Examples of the anode current collector 1 roughened may include a metal foil subjected to electrolytic treatment, sand blast treatment, or the like. The electrolytic treatment is a method of providing concavity and convexity by forming fine particles on the surface of a metal foil or the like with the use of an electrolytic method in an electrolytic bath. A copper foil fabricated by an electrolytic method is generally called "an electrolytic copper foil (such as an electrolytic Cu foil)."

In particular, the surface of the anode current collector 1 may be preferably roughened. Thereby, due to an anchor effect, adhesibility of the anode active material layer 2 with respect to the anode current collector 1 is improved. Although the surface roughness (such as ten-point average roughness Rz) of the anode current collector 1 is not particularly limited, the surface roughness may be preferably large as much as possible in order to improve adhesibility of the anode active material layer 2 by the anchor effect. However, in the case where the surface roughness is excessively large, adhesibility of the anode active material layer 2 may be lowered.

### [Anode Active Material Layer]

As illustrated in FIG. 2, the anode active material layer 2 contains one or more particulate anode active materials 200 capable of inserting and extracting an electrode reactant (lithium ions). The anode active material layer 2 may further contain other materials such as an anode binder and an anode electric conductor as necessary.

The anode active material 200 includes a core section 201 capable of inserting and extracting lithium ions and a covering section 202 provided on the surface of the core section 201. Such a state in which the core section 201 is covered with the covering section 202 may be checked, for example, with the use of a scanning electron microscope (SEM) or the like. Further, crystallinity (crystal state) of the core section 201 and the covering section 202 may be checked with the use of a TEM or the like as illustrated in FIG. 3 to FIG. 5.

### [Core Section]

The core section 201 contains Si and O as constituent elements. An atom ratio x (O/Si) of O with respect to Si satisfies 0≤x<0.5. More specifically, the core section 201 may contain, for example, a silicon-based material (SiOₓ: 0≤x<0.5). One reason for this is that, in this case, compared to a case in which the atom ratio x is out of the range (x≥0.5), at the time of charge and discharge, the core section 201 easily inserts and extracts lithium ions, and the irreversible capacity is decreased, and therefore, a high battery capacity is obtained.

As is clear from the foregoing composition (the atom ratio x), a formation material of the core section 201 may be a simple substance of Si (x=0), and may be an oxide of Si (SiOₓ: 0<x<0.5). However, x may be preferably small as much as possible, and x may be more preferably 0 (the simple substance of Si). One reason for this is that, in this case, high energy density is obtained, and thereby, the battery capacity is further increased. Another reason for this is that, in this case, degradation of the core section 201 is suppressed, and therefore, the discharge capacity is less likely to be lowered from the initial stage of charge-discharge cycles. However, the term "simple substance" merely refers to a general simple substance, and does not necessarily refer to a purity 100% simple substance. That is, the silicon-based material may contain a small amount of impurity (elements other than O).

The crystallinity of the core section 201 may be highly-crystalline, low-crystalline, or noncrystalline. In particular, the crystallinity of the core section 201 may be preferably highly-crystalline or low-crystalline, and may be more preferably highly-crystalline. One reason for this is that, in this case, at the time of charge and discharge, the core section 201 easily inserts and extracts lithium ions, and therefore, a high battery capacity and the like are obtained. Another reason for this is that, in this case, at the time of charge and discharge, the core section 201 is less likely to be expanded and shrunk. In particular, the half bandwidth (2θ) of the diffraction peak attributable to (111) crystal plane of Si obtained by X-ray diffraction may be preferably equal to or less than 20 deg. Further, the crystallite size attributable to the (111) crystal plane of Si may be preferably equal to or larger than 10 nm, since thereby, higher effects are obtained.

It is to be noted that the core section 201 may contain one or more elements other than Si and O together with Si and O.

Specifically, the core section 201 may preferably contain Fe as a constituent element, since thereby, electric resistance of the core section 201 is lowered. Though the ratio of Fe (Fe/(Si+O)) with respect to Si and O is not particularly limited, in particular, such a ratio may be preferably from 0.01 wt % to 7.5 wt % both inclusive. One reason for this is that, in this case, in addition to lowered electric resistance of the core section 201, diffusion characteristics of lithium ions are improved.

In the core section 201, Fe may exist separately from Si and O (in the free state), or may form an alloy or a compound with at least one of Si and O. The same is similarly applicable to after-described Al and the like. A state of the core section 201 containing Fe (such as a bonding state of Fe) may be checked, for example, with the use of EDX or the like.

In addition thereto, the core section 201 may contain at least one of elements such as Al, Cr, Ni, B, Mg, Ca, Ti, V, Mn, Co, Cu, Ge, Y, Zr, Mo, Ag, In, Sn, Sb, Ta, W, Pb, La, Ce, Pr, and Nd as constituent elements. In particular, at least one of Al, Ca, Mn, Cr, Mg, and Ni may be preferable, since thereby, electric resistance of the core section 201 is lowered. The ratio of Al or the like (Al or the like/(Si+O)) with respect to Si and O is not particularly limited. It is to be noted that, in the case where the core section 201 contains Al, a low crystallinity state is obtained. Therefore, at the time of charge and discharge, the core section 201 is less likely to be expanded and shrunk, and diffusion characteristics of lithium ions are further improved.

Although the average grain diameter (a median diameter D50) of the core section 201 is not particularly limited, in particular, the average grain diameter thereof may be preferably from 0.1 µm to 20 µm both inclusive. One reason for this is that, in this case, higher effects are obtained. More specifically, in the case where D50 is excessively small, due to increase of the surface area, safety may be lowered. In contrast, in the case where D50 is excessively large, the anode active material 200 may be broken due to expansion at the time of charge. In addition thereto, in the case where D50 is excessively small, coating of slurry containing the anode active material 200 may be less likely to be facilitated.

### [Covering Section]

The covering section 202 is provided in at least part of the surface of the core section 201. Therefore, the covering section 202 may cover only part of the surface of the core section 201, or may cover all of the surface of the core section 201. In the former case, the covering section 202 may be scattered in a plurality of locations on the surface of the core section 201.

The covering section 202 contains Si and O as constituent elements. An atom ratio y (O/Si) of O with respect to Si satisfies 0.5≤y≤1.8. More specifically, the covering section 202 may contain, for example, a silicon-based material (SiO_{y}: 0.5≤y≤1.8). One reason for this is that, in this case, even if charge and discharge are repeated, degradation of the anode active material 200 is suppressed. Thereby, while insertion and extraction of lithium ions in the core section 201 are secured, the core section 201 is chemically and physically protected by the covering section 202.

More specifically, in the case where the covering section 202 exists between the core section 201 and an electrolytic solution, the reactive core section 201 is less likely to be in contact with the electrolytic solution, and therefore, a decomposition reaction of the electrolytic solution is suppressed. In this case, in the case where the covering section 202 is formed of a material (a material containing the common element (Si) as a constituent element) of the same system as that of the material of the core section 201, adhesibility of the covering section 202 with respect to the core section 201 is improved.

Further, the covering section 202 has flexibility (deformable characteristics). Therefore, even if the core section 201 is expanded and shrunk at the time of charge and discharge, the covering section 202 is easily expanded and shrunk (stretched) accordingly. Thereby, when the core section 201 is expanded and shrunk, the covering section 202 is less likely to be broken (for example, fractured), and therefore, the state in which the core section 201 is covered with the covering section 202 is retained even if charge and discharge are repeated. Therefore, even if the core section 201 is cracked at the time of charge and discharge, a newly-formed surface is less likely to be exposed, and the newly-formed surface is less likely to be in contact with the electrolytic solution. Therefore, a decomposition reaction of the electrolytic solution is significantly suppressed.

As is clear from the foregoing composition (the atom ratio y), a formation material of the covering section 202 is an oxide (SiOy) of Si. In particular, the atom ratio y may preferably satisfy 0.7≤y≤1.3, and may be more preferably 1.2, since thereby, higher effects are obtained.

The crystallinity of the covering section 202 is low-crystalline or noncrystalline (amorphous). One reason for this is that, in this case, lithium ions are easily diffused compared to in a case where the crystallinity of the covering section 202 is highly-crystalline. Therefore, even if the surface of the core section 201 is covered with the covering section 202, the core section 201 easily and smoothly inserts and extracts lithium ions.

In particular, the crystallinity of the covering section 202 may be preferably lower (close to a noncrystalline state) than the crystal state of the core section 201, and may be more preferably noncrystalline. One reason for this is that, in this case, flexibility of the covering section 202 is improved, and therefore, the covering section 202 is easily expanded and shrunk following expansion and shrinkage of the core section 201 at the time of charge and discharge. Another reason for this is that, in this case, the covering section 202 is less likely to trap lithium ions, and therefore, insertion and extraction of lithium ions in the core section 201 are further less likely to be inhibited. It is to be noted that, for example, the term "the crystallinity of the covering section 202 is lower than the crystallinity of the core section 201" may refer to a state that the covering section 202 is low-crystalline or noncrystalline in the case where the core section 201 is highly-crystalline, or may refer to a state that the covering section 202 is noncrystalline in the case where the core section 201 is low-crystalline.

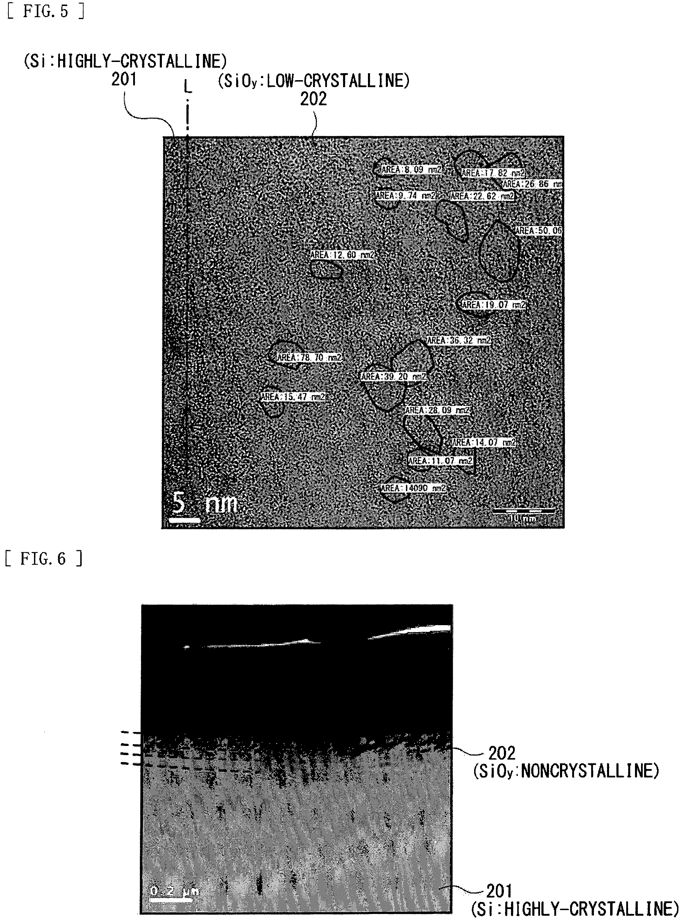

It is to be noted that FIG. 3 and FIG. 6 each illustrate a case in which the core section 201 is highly-crystalline Si and the covering section 202 is noncrystalline SiOy. In contrast, FIG. 4 and FIG. 5 each illustrate a case in which the core section 201 is highly-crystalline Si and the covering section 202 is low-crystalline SiOy.

The term "low-crystalline" refers to a crystal state in which both a noncrystalline region and crystal regions (crystal grains) are included, and is different from the term "noncrystalline" referring to a crystal state in which only a noncrystalline region is included. For checking whether or not the covering section 202 is low-crystalline, for example, the covering section 202 may be observed with the use of the foregoing HAADF STEM or the like. In the case where a state in which a noncrystalline region and crystal regions coexist is confirmed from a TEM photograph, such a covering section 202 is low-crystalline. It is to be noted that in the case where a noncrystalline region and a crystal region coexist, the crystal region is observed as a region (a crystal grain) having a granular outline. Since a stripe-like pattern (crystal lattice stripes) attributable to crystallinity is observed inside the crystal grains, the crystal grains are allowed to be distinguished from the noncrystalline region.

As is clear from the TEM photographs illustrated in FIG. 3 and FIG. 4, there is a distinct difference between a noncrystalline state and a low-crystalline state. In the case where the covering section 202 is noncrystalline, as illustrated in FIG. 3, only a noncrystalline region is observed, and crystal regions (crystal grains having crystal lattice stripes) are not observed. In contrast, in the case where the covering section 202 is low-crystalline, as illustrated in FIG. 4, a state in which crystal grains (sections indicated by arrows) are scattered in a noncrystalline region is observed. The crystal grains have crystal lattice stripes at predetermined intervals according to lattice spacing d of Si, and therefore, the crystal grains are clearly distinguished from the noncrystalline region in the vicinity thereof. It is to be noted that when the TEM photograph illustrated in FIG. 4 is subjected to Fourier transformation (a pattern corresponding to an electron diffraction pattern is obtained), spots are lined in a state of a ring, and therefore, it is confirmed that many crystal regions exist inside the covering section 202.

It is to be noted that observation procedure of the covering section 202 by HAADF STEM may be, for example, as follows. First, the surface of a TEM's grid made of Cu is coated with an adhesive. Thereafter, a sample (the anode active material 200) is scattered on the adhesive. Subsequently, a carbon material (graphite) is deposited on the surface of the powder sample with the use of a vacuum evaporation method. Subsequently, a thin film (Pt/W) is deposited on the surface of the carbon material with the use of a focused ion beam (FIB) method, and thereafter, the resultant is subjected to a thinning process (accelerating voltage: 30 kV). Finally, a cross section of the anode active material 200 is observed with the use of a HAADF STEM (accelerating voltage: 200 kV). Such an observation method is a method sensitive to a composition of the sample, and thereby, in general, an image with contrast based on luminance substantially proportional to square of atomic number is obtained.

In the TEM photographs illustrated in FIG. 3 and FIG. 4, regions having different crystal states according to a line L as a boundary are observed. When the regions having different crystal states are analyzed by EDX, it is confirmed that the region located inside the line L is a highly-crystalline core section (Si), and the region located outside the line L is a low-crystalline or noncrystalline covering section (SiOy).

The low-crystalline degree of the covering section 202 is not particularly limited. In particular, the average area occupancy of crystal grains attributable to (111) plane and (220) plane of Si may be preferably equal to or less than 35%, may be more preferably equal to or less than 25 %, and may be even more preferably equal to or less than 20 %. One reason for this is that, in this case, higher effects are obtained. As illustrated in FIG. 4, the term "the crystal grains attributable to the (111) plane" refers to crystal regions each having crystal lattice stripes with the lattice spacing d of 0.31 nm, and the term "the crystal grains attributable to the (220) plane" refers to crystal regions each having crystal lattice stripes with the lattice spacing d of 0.19 nm.

The calculation procedure of the average area occupancy is as follows. First, as illustrated in FIG. 5, a cross section of the covering section 202 is observed with the use of a HAADF STEM to obtain a TEM photograph. In this case, the observation magnification ratio is 1.2×10⁶, and the observation area is 65.6 nm×65.7 nm. It is to be noted that FIG. 5 is a TEM photograph obtained by observing the same region as that of FIG. 4. Subsequently, presence or absence of crystal lattice stripes, a value of the lattice spacing d, and the like are examined to identify a range where the crystal grains attributable to the (111) plane of Si and the crystal grains attributable to the (220) plane of Si exist. Thereafter, the outlines of the crystal grains are portrayed in the TEM photograph. Subsequently, after each area of each crystal grain is calculated, [area occupancy (%)=(sum of areas of crystal grains/observation area)×100] is calculated. The portraying of the outlines of the crystal grains and the calculation of the area occupancy may be performed manually, or may be performed automatically with the use of exclusive processing software and/or the like. Finally, the calculation operation of the area occupancy is repeated for 40 areas, and thereafter, the average value (the average area occupancy) of the area occupancy each calculated in each area is calculated. In this case, in order to calculate the average area occupancy by adding distribution tendency of the crystal grains, it may be preferable that the covering section 202 be divided into two equal parts in the thickness direction, and area occupancies of 20 areas be calculated each in the inner section and the outer section.

Further, although the foregoing average grain diameter of the crystal grains is not particularly limited, in particular, the foregoing average grain diameter may be preferably equal to or less than 55 nm, and may be preferably equal to or less than 50 nm, since thereby, higher effects are obtained. The calculation procedure of the average grain diameter of the crystal grains is similar to that in the case of calculating the average area occupancy, except that after each average grain diameter is measured for each area, the average value (the final average grain diameter) of the measured average grain diameters is calculated. It is to be noted that, in the case where a grain diameter of a crystal grain is measured, for example, after the outline of the crystal grain is converted to a circle (a circle having an area equal to that of the shape defined by the outline of the crystal grain is identified), the diameter of the circle is regarded as the grain diameter. The calculation of the grain diameter may be performed manually or automatically as in the calculation of the average area occupancy.

Further, in the case where the covering section 202 is divided into two equal parts in the thickness direction as described above, the average area occupancy in the inner section may be the same as or may be different from that in the outer section. In particular, the average area occupancy of the crystal grains in the inner section may be preferably the same as or larger than the average area occupancy of the crystal grains in the outer section (the average area occupancy in the inner section≥ the average area occupancy in the outer section), since thereby, higher effects are obtained. The same is similarly applicable to the average grain diameter. It is to be noted that, as described above, average area occupancies and average grain diameters of 20 areas are calculated each in the inner section and the outer section.

Although the average thickness of the covering section 202 is not particularly limited, in particular, the average thickness of the covering section 202 may be preferably thin as much as possible, and may be more preferably from 1 nm to 3000 nm both inclusive. One reason for this is that, in this case, the core section 201 easily inserts and extracts lithium ions, and a protective function of the covering section 202 is effectively exercised. More specifically, in the case where the average thickness of the covering section 202 is less than 1 nm, the covering section 202 may be less likely to protect the core section 201. In contrast, in the case where the average thickness of the covering section 202 is larger than 3000 nm, electric resistance is increased, and the core section 201 may be less likely to insert and extract lithium ions at the time of charge and discharge. One reason for this is as follows. In the case where a formation material of the covering section 202 is SiOy, such SiOy easily inserts and extracts lithium ions, while such SiOy is less likely to extract once-inserted lithium ions.

The average thickness of the covering section 202 is calculated by the following procedure. First, one piece of the anode active material 200 is observed with the use of an SEM or the like. The magnification ratio at the time of the observation may be preferably a magnification ratio at which the interface between the core section 201 and the covering section 202 is allowed to be checked (determined) visually in order to measure a thickness T of the covering section 202. Subsequently, after the thicknesses T of the covering section 202 at arbitrary ten locations are measured, the average value thereof (an average thickness T per one piece of the active material 200) is calculated. In this case, the measurement locations may be preferably set not to be concentrated around a certain place but to be dispersed widely as much as possible. Subsequently, the foregoing operation of calculating an average value is repeated until the total number of observed pieces of the active material 200 by the SEM reaches 100. Finally, the average value (the average value of respective average thicknesses T) of the average values (the average thicknesses T per each one piece of the active material 200) calculated for 100 pieces of the active materials 200 is calculated, and the resultant value is regarded as the average thickness of the covering section 202.

Further, although the average coverage ratio of the covering section 202 with respect to the core section 201 is not specifically limited, the average coverage ratio thereof may be preferably large as much as possible, and in particular, may be more preferably equal to or larger than 30% (from 30% to 100% both inclusive). One reason for this is that, in this case, the protective function of the covering section 202 is further improved.

The average coverage ratio of the covering section 202 is calculated by the following procedure. First, as in the case of calculating the average thickness, one piece of the active material 200 is observed with the use of an SEM or the like. The magnification ratio at the time of the observation may be preferably a magnification ratio at which, out of the core section 201, a portion covered with the covering section 202 and a portion not covered with the covering section 202 are allowed to be identified visually. Subsequently, out of the outer edge (the outline) of the core section 201, the length of the portion covered with the covering section 202 and the length of the portion not covered with the covering section 202 are measured. Thereafter, [the coverage ratio (the coverage ratio per one piece of the active material 200:%)=(the length of the portion covered with the covering section 202/the length of the outer edge of the core section 201)×100] is calculated. Subsequently, the foregoing operation of calculating the coverage ratio is repeated until the total number of observed pieces by the SEM reaches 100. Finally, the average value of the coverage ratios (the coverage ratios per each one piece of the active material 200) calculated for 100 pieces of the anode active materials 200 is calculated, and the calculated value is regarded as the average coverage ratio of the covering section 202.

It is to be noted that the covering section 202 may be preferably adjacent to the core section 201. However, a natural oxide film (SiO₂) may exist between the core section 201 and the covering section 202. The natural oxide film may be, for example, a film obtained by oxidizing a portion in the vicinity of the surface layer of the core section 201 in the air. In the case where the core section 201 exists in the center of the anode active material 200, and the covering section 202 exists outside thereof, existence of the natural oxide film is less likely to affect functions of the core section 201 and the covering section 202.

Here, for confirming a state in which the anode active material 200 includes the core section 201 and the covering section 202, for example, the anode active material 200 may be observed with the use of X-ray photoelectron spectroscopy (XPS), energy dispersive X-ray spectroscopy (EDX), or the like in addition to the foregoing SEM observation.

In this case, the compositions of the core section 201 and the covering section 202 may be checked, for example, by measuring oxidation degrees (atoms x and y) of the central section and the surface layer section of the anode active material 200. It is to be noted that for examining the composition of the core section 201 covered with the covering section 202, the covering section 202 may be dissolved and removed with the use of an acid such as HF.

Detailed procedure of measuring the oxidation degrees may be, for example, as follows. First, the quantity of the anode active material 200 (the core section 201 covered with the covering section 202) is determined with the use of a combustion method to calculate the entire Si amount and the entire O amount. Subsequently, the covering section 202 is washed and removed with the use of HF or the like, and thereafter, the quantity of the core section 202 is determined with the use of a combustion method to calculate the Si amount and the O amount. Finally, the Si amount and the O amount of the core section 201 are subtracted from the entire Si amount and the entire O amount to calculate the Si amount and the O amount of the covering section 202. Thereby, the Si amounts and the O amounts of the core section 201 and the covering section 202 are determined, and therefore, the respective oxidation degrees are allowed to be determined. It is to be noted that, instead of washing and removing the covering section 202, an uncovered portion of the core section 201 may be used together with a portion of the core section 201 covered with the covering section 202 to measure the oxidation degrees.

It is to be noted that in the anode active material layer 2, the plurality of anode active materials 200 may be separated from one another (dispersed), or two or more thereof may be in contact with (or linked to) one another. In the case where two or more of the anode active materials 200 are in contact with one another, position relation of the two or more of the anode active materials 200 may be arbitrary. Further, the covering section 202 may contain at least one elements of Fe, Al, Ca, and the like as constituent elements, since thereby, electric resistance of the covering section 202 is lowered. The ratio of Fe or the like (Fe or the like/(Si+O)) with respect to Si and O is not particularly limited.

### [Carbon-Containing Material]

In particular, the covering section 202 has one or more voids inside. In at least part of the voids, a material (a carbon-containing material) containing C as a constituent element is provided. That is, the carbon-containing material is inserted into the voids, and the voids are filled with the carbon-containing material. One reason for this is that, in this case, electric conductivity of the anode active material 200 is improved and a decomposition reaction of an electrolytic solution is suppressed without inhibiting expansion and shrinkage characteristics of the covering section 202 following expansion and shrinkage of the core section 201 described above.

More specifically, the voids existing inside the covering section 202 are utilized as spaces for relaxing inner stress generated when the anode active material 200 is expanded and shrunk at the time of charge and discharge. Therefore, in the case where the covering section 202 has the voids, the anode active material 200 is less likely to be broken at the time of charge and discharge. In contrast, since the highly-reactive covering section 202 is exposed inside the voids, the electrolytic solution is easily decomposed on the exposed surface. In regard to this point, in the case where the carbon-containing material is provided in the voids, the highly-reactive covering section 202 is less likely to be exposed inside the voids, and therefore, a decomposition reaction of the electrolytic solution is suppressed. Further, since carbon has superior deformation characteristics (flexibility) and superior electric conductivity, the carbon-containing material is less likely to inhibit expansion and shrinkage characteristics of the covering section 202 following expansion and shrinkage of the core section 201, and electric conductivity of the covering section 202 containing the carbon-containing material is improved.

It is to be noted that the carbon-containing material may contain only C as a constituent element, or may contain one or more elements other than C together with C. Types of "elements other than C" are not particularly limited, and may be, for example, H, O, or the like.

Generally, when a carbon material is analyzed with the use of Raman spectrum method, in the Raman spectrum, a G band peak attributable to a graphite structure is detected in the vicinity of 1590 cm⁻¹, and a D band peak attributable to a defect is detected in the vicinity of 1350 cm⁻¹. A ratio IG/ID between an intensity IG of the G band peak and an intensity ID of the D band peak is also called a G/D ratio, and is an index indicating crystallinity (purity) of carbon materials.

Although the ratio IG/ID of the carbon-containing material provided in the voids of the covering section 202 is not particularly limited, in particular, the ratio IG/ID may be preferably from 0.3 to 3 both inclusive. One reason for this is that, in this case, superior binding characteristics, superior electric conductivity, and superior deformation characteristics are obtained.

More specifically, in the case where the ratio IG/ID is smaller than 0.3, the binding characteristics are increased, and therefore, adhesibility among respective pieces of the carbon-containing material and adhesibility of the carbon-containing material with respect to the covering section 202 are improved. However, in this case, the electric conductivity is lowered, and the carbon-containing material becomes rigid, and therefore, the carbon-containing material may be less likely to be expanded and shrunk following expansion and shrinkage of the covering section 202, and there is a possibility that sufficient electric conductivity is not obtained. In contrast, in the case where the ratio IG/ID is larger than 3, the electric conductivity is increased, and the carbon-containing material is softened, and therefore, the carbon-containing material is easily expanded and shrunk following expansion and shrinkage of the covering section 202, and sufficient electric conductivity is obtained. However, in this case, the binding characteristics are lowered, and therefore, there is a possibility that adhesibility among respective pieces of the carbon-containing material and adhesibility of the carbon-containing material with respect to the covering section 202 be lowered. In contrast, in the case where the ratio IG/ID is from 0.3 to 3 both inclusive, the binding characteristics and the electric conductivity of the carbon-containing material are increased, and the carbon-containing material is easily expanded and shrunk following expansion and shrinkage of the covering section 202.

Formative factors of the voids are not particularly limited. Without relation to the formative factors thereof, the voids are allowed to serve as spaces for relaxing stress as long as the voids exist in the covering section 202. Further, the void distribution in the covering section 202 is not particularly limited. In particular, the void diameter of the maximum peak in the void distribution in the covering section 202 that is measured by a nitrogen absorption method and a mercury intrusion method may be preferably equal to or less than 500 nm, and may be more preferably equal to or less than 50 nm. One reason for this is that, if the void diameter is excessively large, the occupied volume of Si in the covering section 202 is decreased, and therefore, the insertion-extraction amount of lithium ions is lowered (the battery capacity is decreased).

As a method of measuring the void distribution of the covering section 202, any method may be used according to size of the void diameter. For example, a nitrogen absorption method and/or the like is used in the case of the void distribution in which the void diameter is equal to or larger than 3 nm, and a mercury intrusion method and/or the like is used in the case of the void distribution in which the void diameter is equal to or larger than 100 nm. In the mercury intrusion method, a mercury porosimeter is used, the surface tension of mercury is 485 mN/m, the contact angle is 130 deg, and relation between the void diameter and pressure is approximated as 180/pressure=the void diameter. Examples of the mercury porosimeter may include Autopore IV9500 available from Shimadzu Corporation. Further, in the nitrogen absorption method, an automatic specific surface area/micropore distribution measurement apparatus such as Tristar 3000 available from Shimadzu Corporation is used.

It is to be noted that the covering section 202 may be configured of a single layer or a plurality of layers. In particular, as illustrated in FIG. 6, the covering section 202 may be preferably configured of a plurality of layers, since thereby, spaces (voids) for relaxing stress are easily formed in the covering section 202 (between the layers). Dotted lines illustrated in FIG. 6 substantially indicate boundaries between the respective layers. However, the covering section 202 may be configured of a plurality of layers as a whole, or part of the covering section 202 may be configured of a plurality of layers.

### [Carbon-Containing Layer]

A carbon-containing layer may be provided on the surface of the anode active material 200. The carbon-containing layer is provided in at least part of the surface of the anode active material 200, and may preferably have electric resistance lower than that of the core section 201 and the covering section 202. One reason for this is that, in this case, the core section 201 is further less likely to be in contact with the electrolytic solution, and therefore, a decomposition reaction of the electrolytic solution is suppressed. Another reason for this is that, in this case, electric resistance of the anode active material 200 is further lowered.

The composition of the carbon-containing layer is similar to the composition of the foregoing carbon-containing material. That is, the carbon-containing layer contains C as a constituent element, and may further contain one or more other elements (such as H and O) as necessary. However, the formation material of the carbon-containing layer may be the same as or different from the formation material of the carbon-containing material. Specific examples of the carbon-containing layer may include after-described carbon materials as "other anode active materials." It is to be noted that, in the case where the formation material of the carbon-containing layer is the same as the formation material of the carbon-containing material, the voids of the covering section 202 are filled with part of the carbon-containing layer instead of the carbon-containing material, and the voids may be sealed. One reason for this is that, in this case, the carbon-containing material and the carbon-containing layer are allowed to be formed substantially in block.

Although the average thickness of the carbon-containing layer is not particularly limited, in particular, the average thickness of the carbon-containing layer may be preferably equal to or less than 500 nm, and may be more preferably equal to or less than 200 nm. Further, although the average coverage ratio of the carbon-containing layer with respect to the anode active material layer 200 is not particularly limited, in particular, the average coverage ratio may be preferably equal to or larger than 30%, since thereby, higher effects are obtained. In particular, in the case where the average thickness is larger than 500 nm, a state of slurry containing the anode active material 200 is degraded, and therefore, coating with slurry may be less likely to be facilitated. It is to be noted that, details of calculation procedures of the average coverage ratio and the average thickness of the carbon-containing layer are similar to those of the covering section 202.

Examples of the anode binder may include one or more of synthetic rubbers, polymer materials, and the like. Examples of the synthetic rubber may include a styrene-butadiene-based rubber, a fluorine-based rubber, and ethylene propylene diene. Examples of the polymer material may include polyvinylidene fluoride, polyimide, polyamide, polyamideimide, polyacrylic acid, lithium polyacrylate, sodium polyacrylate, polymaleic acid, and copolymers thereof. Further examples of the polymer material may include carboxymethyl cellulose, styrene butadiene rubber, and polyvinyl alcohol.

Examples of the anode electric conductor may include one or more of carbon materials such as graphite, carbon black, acetylene black, and Ketjen black. It is to be noted that the anode electric conductor may be a metal material, an electrically-conductive polymer, or the like as long as the material has electric conductivity.

It is to be noted that, the anode active material layer 2 may contain other type of anode active materials together with the anode active material 200 including the foregoing core section 201 and the foregoing covering section 202.

Examples of the foregoing "other anode active materials" may include carbon materials. One reason for this is that, in this case, electric resistance of the anode active material layer 2 is lowered, and the anode active material layer 2 is less likely to be expanded and shrunk at the time of charge and discharge. Examples of the carbon materials may include graphitizable carbon, non-graphitizable carbon in which spacing of (002) plane is a value equal to or greater than 0.37 nm, and graphite in which spacing of (002) plane is a value equal to or smaller than 0.34 nm. More specifically, examples of the carbon materials may include pyrolytic carbons, cokes, glassy carbon fiber, an organic polymer compound fired body, activated carbon, and carbon blacks. Examples of the cokes may include pitch coke, needle coke, and petroleum coke. The organic polymer compound fired body is obtained by firing a phenol resin, a furan resin or the like at appropriate temperature. The shape of any of the carbon materials may be any of a fibrous shape, a spherical shape, a granular shape, and a scale-like shape.

In addition thereto, other anode active material may be, for example, a metal oxide or a polymer compound. Examples of the metal oxide may include iron oxide, ruthenium oxide, and molybdenum oxide. Examples of the polymer compound may include polyacetylene, polyaniline, and polypyrrole.

The anode active material layer 2 may be formed, for example, by a coating method, a firing method (a sintering method), or two or more methods thereof. The coating method may be a method in which, for example, after an anode active material is mixed with an anode binder and/or the like, the mixture is dispersed in an organic solvent or the like, and coating is performed. The firing method nay be a method in which, for example, after coating is performed by a procedure similar to that of the coating method, heat treatment is performed at temperature higher than the melting point of the anode binder and/or the like. As the firing method, any of known methods may be used. Examples of the firing method may include an atmosphere firing method, a reactive firing method, and a hot press firing method.

### [Method of Manufacturing Anode]

The anode may be manufactured, for example, by the following procedure. It is to be noted that since the formation materials of the anode current collector 1 and the anode active material layer 2 have been described in detail above, explanation thereof will be omitted.

First, the granular (powdery) core section 201 containing Si and O as constituent elements may be obtained with the use, for example, of a gas atomization method, a water atomization method, a fusion pulverization method, or the like. It is to be noted that in the case where a metal element such as Fe is to be contained in the core section 201, a metal material is fused together with raw materials.

Subsequently, the covering section 202 containing Si and O as constituent elements is formed on the surface of the core section 201 with the use, for example, of a vapor-phase deposition method such as an evaporation method and a sputtering method. In the case where the vapor-phase deposition method is used as above, the covering section 202 tends to easily become noncrystalline. Alternatively, it is possible that a deposition process be performed while heating, or heating be performed after forming the covering section 202, and thereby, the covering section 202 becomes low-crystalline. The low-crystalline degree may be controlled according to conditions such as temperature and time at the time of heating. By the heating process, moisture in the covering section 202 is removed, and adhesibility of the covering section 202 with respect to the core section 201 is improved.

Upon forming the covering section 202, it may be preferable that right and wrong of the deposition process be controlled with the use of an opening and closing mechanism such as a shutter while rotating the core section 201 as necessary, and thereby, the deposition process be performed on the surface of the core section 201 several times from multiple directions. One reason for this is that, in this case, the surface of the core section 201 is easily covered with the covering section 202 uniformly. Another reason for this is that, in this case, the covering section 202 has multiple layers, and therefore, spaces (voids) for relaxing stress are easily formed between the layers.

Subsequently, a carbon-containing material is formed in the voids of the covering section 202 with the use of a thermal decomposition chemical vapor deposition (CVD) method or the like. In this case, as a carbon source (organic gas), for example, methane, ethane, ethylene, acetylene, propane, or the like may be used. By using the thermal decomposition CVD method, the carbon source reaches inside of minute voids, and thermally decomposed, and therefore, the minute voids are easily filled with the carbon-containing material. Such a structure in which the minute voids of the covering section 202 are filled with the carbon-containing material is a characteristic structure firstly achieved by forming the carbon-containing material separately from the covering section 202 with the use of the thermal decomposition CVD method or the like. In contrast, for example, in the case where the formation material of the covering section 202 and the formation material of the carbon-containing material are co-evaporated, or in the case where the carbon-containing material is formed with the use of an evaporation method after forming the covering section 202, the foregoing characteristic structure is not obtainable. One reason for this is that, in this case, it is not possible to selectively form the carbon-containing material that fills the voids of the covering section 202. Thereby, the core section 201 is covered with the covering section 202, and the carbon-containing material is inserted into the voids of the covering section 202, and therefore, the anode active material 200 is obtained.

It is to be noted that, upon forming the anode active material 200, a carbon-containing layer may be formed on the surface of the covering section 202 with the use of a vapor-phase deposition method, a wet coating method, or the like. Examples of the vapor-phase deposition method may include an evaporation method, a sputtering method, a thermal decomposition CVD method, an electron beam evaporation method, and a sugar carbonization method. In particular, the thermal decomposition CVD method may be preferable. One reason for this is that, in this case, the carbon-containing layer is easily formed to have a uniform thickness. Another reason for this is that, in this case, in the case where the voids of the covering section 202 are sealed with the carbon-containing layer instead of the carbon-containing material, the minute voids are allowed to be filled with part of the carbon-containing layer.

In the case where an evaporation method is used, for example, the carbon-containing layer may be formed by directly spraying steam onto the surface of the anode active material. In the case where a sputtering method is used, for example, the carbon-containing layer may be formed with the use of powder sputtering method while introducing Ar gas. In the case where a CVD method is used, for example, the carbon-containing layer may be formed by mixing gas obtained by sublimating metallic chloride and mixed gas configured of H₂, N₂, and/or the like so that the molar ratio of the metallic chloride becomes 0.03 to 0.3 both inclusive, and subsequently, heating the resultant up to temperature equal to or higher than 1000 deg C. In the case where a wet coating method is used, for example, the carbon-containing layer may be formed on the surface of an anode active material by forming a metallic hydroxide by adding an alkali solution while adding a metal-containing solution to slurry containing the anode active material, and subsequently performing a reduction treatment with the use of hydrogen at 450 deg C. It is to be noted that, in the case where a carbon material is used as a formation material of the carbon-containing layer, the anode active material is fed into a chamber, organic gas is introduced into the chamber, and subsequently, heating treatment is performed for 5 hours under the conditions of 1000 Pa and 1000 deg C or more, and thereby, the carbon-containing layer is formed on the surface of the anode active material. Types of the organic gas are not particularly limited, as long as carbon is generated by a thermal decomposition thereby. Examples thereof may include methane, ethane, ethylene, acetylene, and propane.

Subsequently, the anode active material 200 is mixed with other materials such as an anode binder to prepare an anode mixture, and thereafter, the anode mixture is dissolved in a solvent such as an organic solvent to obtain anode mixture slurry. Finally, surfaces of the anode current collector 1 are coated with the anode mixture slurry, and thereafter, the anode mixture slurry is dried to form the anode active material layer 2. Thereafter, the anode active material layer 2 may be compression-molded and heated (fired) as necessary.

### [Function and Effect of Anode Active Material]

According to the anode active material, the anode active material 200 has the low-crystalline or noncrystalline covering section 202 on the surface of the core section 201, and the core section 201 and the covering section 20 have the foregoing compositions. Further, the carbon-containing material is provided in the voids of the covering section 202. Thereby, as described above, the core section 201 easily inserts and extracts lithium ions smoothly, and the core section 201 is less likely to be broken at the time of charge and discharge. Further, while smooth insertion and extraction of lithium ions of the core section 201 are retained, generation of an irreversible capacity due to existence of the covering section 202 is suppressed. Further, electric conductivity of the anode active material 200 is improved, and a decomposition reaction of the electrolytic solution resulting from the high-reactive covering section 202 is suppressed. Therefore, the foregoing anode active material is allowed to contribute to improvement of performance of a secondary battery using an anode active material or an anode.

In particular, in the case where the ratio IG/ID of the carbon-containing material measured by Raman spectrum method is from 0.3 to 3 both inclusive, or the void diameter of the maximum peak in the void distribution of the covering section that is measured by a nitrogen absorption method and a mercury intrusion method is equal to or less than 500 nm, higher effects are obtainable.

Further, in the case where the covering section 202 is configured of multiple layers, voids for relaxing stress are easily formed in the covering section 202. Thereby, higher effects are obtainable.

Further, in the case where the carbon-containing layer is provided on the surface of the anode active material 200, the average thickness of the carbon-containing layer is equal to or less than 500 nm, or the average coverage ratio of the carbon-containing layer with respect to the anode active material 200 is equal to or larger than 30%, higher effects are obtainable. In this case, in the case where the voids of the covering section 202 are sealed with part of the carbon-containing layer, the anode active material 200 provided with the carbon-containing layer is allowed to be easily formed.

Further, in the case where the covering section 202 is low-crystalline, and the average area occupancy of crystal grains attributable to (111) plane and (220) plane of Si is equal to or less than 35% or the average grain diameter of the crystal grains is equal to or less than 55 nm, higher effects are obtainable.

Further, when the covering section 202 is divided into two equal parts in the thickness direction, and the average area occupancy and the average grain diameter in the inner section of the crystal grains are the same as or are larger than the average area occupancy and the average grain diameter in the outer section of the crystal grains, higher effects are obtainable.

Further, in the case where the average coverage ratio of the covering section 202 with respect to the core section 201 is equal to or larger than 30%, or the average thickness of the covering section 202 is from 1 nm to 3000 nm both inclusive, higher effects are obtainable.

Further, in the case where the core section 201 contains Fe as a constituent element, and the ratio of Fe (Fe/(Si+O)) with respect to Si and O is from 0.01 wt % to 7.5 wt % both inclusive, higher effects are obtainable.

### <2. Secondary Battery>

Next, description will be given of secondary batteries using the foregoing secondary battery-use active material.

### <2-1. Square-Type>

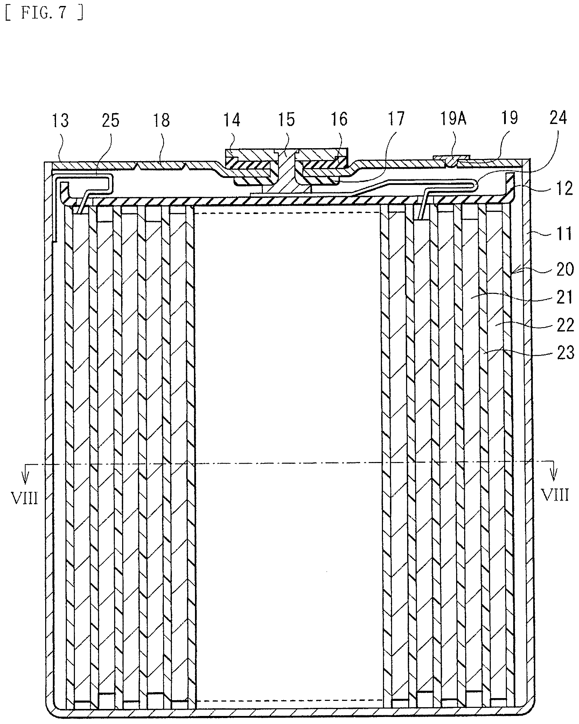

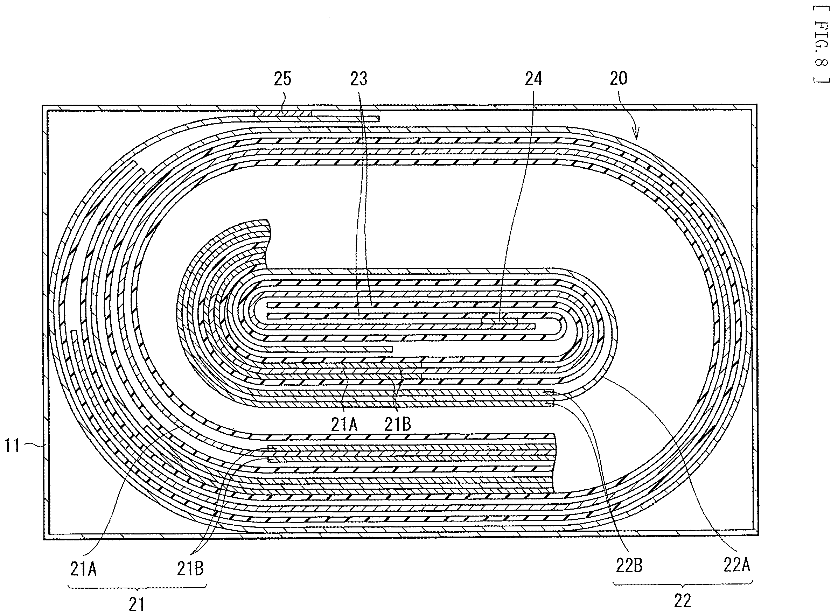

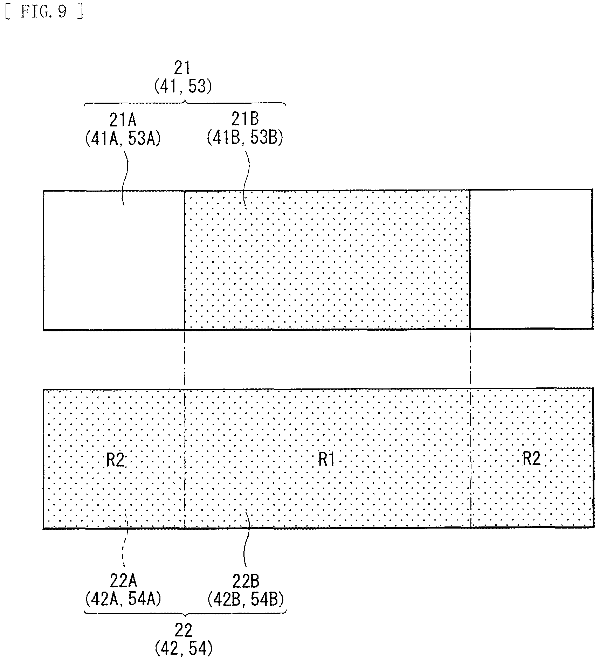

FIG. 7 and FIG. 8 illustrate cross-sectional configurations of a square-type secondary battery. FIG. 8 illustrates a cross section taken along a line VIII-VIII illustrated in FIG. 7. FIG. 9 schematically illustrates planar configurations of a cathode 21 and an anode 22 illustrated in FIG. 8.

### [Whole Configuration of Secondary Battery]

In the square-type secondary battery, a battery element 20 is mainly contained inside a battery can 11. The battery element 20 is a spirally wound laminated body in which the cathode 21 and the anode 22 are laminated with a separator 23 in between, and spirally wound. The battery element 20 has a flat shape correspondingly to the shape of the battery can 11.

The battery can 11 may be, for example, a square package member. As illustrated in FIG. 8, the square package member has a shape in which a cross section in a longitudinal direction is rectangular or substantially rectangular (including a curved line partly), and is applied not only to a square-type battery in the shape of a rectangle but also to a square-type battery in the shape of an oval. That is, the square package member is a serving-dish-like member in the shape of a rectangle with a base or in the shape of an oval with a base, which has a rectangular opening or an opening having a substantially rectangular shape (an oval shape) obtained by connecting arcs by straight lines. It is to be noted that FIG. 8 illustrates a case in which the battery can 11 has a rectangular cross-sectional shape.

The battery can 11 may be made, for example, of an electrically-conductive material such as Fe, Al, and an alloy thereof, and may have a function as an electrode terminal in some cases. In particular, in order to utilize rigidity (difficulty in deformation) to suppress swollenness of the battery can 11 at the time of charge and discharge, Fe that is more rigid than Al may be preferable. It is to be noted that, in the case where the battery can 11 is made of Fe, the surface of the battery can 11 may be plated with Ni or the like.

Further, the battery can 11 has a hollow structure in which one end of the battery can 11 is opened and the other end of the battery can 11 is closed. The battery can 11 is hermetically sealed by an insulating plate 12 and a battery cover 13 that are attached to the open end. The insulating plate 12 is provided between the battery element 20 and the battery cover 13, and may be made, for example, of an insulating material such as polypropylene. The battery cover 13 may be made, for example, of a material similar to that of the battery can 11, and may serve as an electrode terminal as the battery can 11.

Outside the battery cover 13, a terminal plate 14 to become a cathode terminal is provided. The terminal plate 14 is electrically insulated from the battery cover 13 with an insulating case 16 in between. The insulating case 16 may be made, for example, of an insulating material such as polybutylene terephthalate. In the substantial center of the battery cover 13, a through-hole is provided. A cathode pin 15 is inserted into the through-hole so that the cathode pin 15 is electrically connected to the terminal plate 14 and is electrically insulated from the battery cover 13 with a gasket 17 in between. The gasket 17 may be made, for example, of an insulating material. The surface of the gasket 17 may be coated with asphalt.

In the periphery of the battery cover 13, a cleavage valve 18 and an injection hole 19 are provided. The cleavage valve 18 is electrically connected to the battery cover 13. In the case where the internal pressure of the battery becomes a certain level or more by internal short circuit, external heating, or the like, the cleavage valve 18 is separated from the battery cover 13 to release the internal pressure. The injection hole 19 may be sealed, for example, by a sealing member 19A made of a stainless steel corundum.

A cathode lead 24 made of an electrically-conductive material such as Al may be attached to an end (such as the internal end) of the cathode 21. An anode lead 25 made of an electrically-conductive material such as Ni may be attached to an end (such as the outer end) of the anode 22. The cathode lead 24 may be welded to one end of the cathode pin 15, and may be electrically connected to the terminal plate 14. The anode lead 25 may be welded to the battery can 11, and may be electrically connected to the battery can 11.

### [Cathode]

The cathode 21 may have, for example, a cathode active material layer 21 B on both surfaces of a cathode current collector 21 A. However, the cathode active material layer 21B may be provided only on a single surface of the cathode current collector 21A.

The cathode current collector 21A may be made, for example, of an electrically-conductive material such as Al, NI, and stainless steel.

The cathode active material layer 21B contains, as cathode active materials, one or more of cathode materials capable of inserting and extracting lithium ions. The cathode active material layer 21B may contain other materials such as a cathode binder and a cathode electric conductor as necessary. It is to be noted that details of the cathode binder and the cathode electric conductor may be, for example, similar to those of the anode binder and the anode electric conductor described above.

The cathode material may be preferably a lithium-containing compound, since thereby, high energy density is obtained. Examples of the lithium-containing compound may include a composite oxide containing Li and a transition metal element as constituent elements and a phosphate compound containing Li and a transition metal element as constituent elements. In particular, it may be preferable that the transition metal element be one or more of Co, Ni, Mn, and Fe, since thereby, a higher voltage is obtained. The chemical formula of the foregoing compounds may be expressed by, for example, LiₓM11O₂ or Li_{y}M12PO₄. In the formulas, M11 and M12 represent one or more transition metal elements. Values of x and y vary according to the charge and discharge state, and are, in general, in the range of 0.05≤x≤1.10 and 0.05≤y≤1.10. In particular, in the case where the cathode material contains Ni or Mn, volume stability moment tends to be improved.

Examples of the composite oxide containing Li and a transition metal element may include LiₓCoO₂, LiₓNiO₂ (x is any value), and a lithium-nickel-based composite oxide represented by the following Formula (1). Examples of the phosphate compound containing Li and a transition metal element may include LiFePO₄ and LiFe₁₋ᵤMnᵤPO₄ (u<1), since thereby, a high battery capacity is obtained and superior cycle characteristics are obtained as well. It is to be noted that the cathode material may be a material other than the foregoing materials. Examples of such a material may include a material represented by LiₓM14_{y}O₂ (M14 is at least one of Ni and M13 in Formula (1), x is larger than 1, and y is any value).

LiNi₁₋ₓM13ₓO₂ ... (1)

(M 13 is at least one of Co, Mn, Fe, Al, V, Sn, Mg, Ti, Sr, Ca, Zr, Mo, Tc, Ru, Ta, W, Re, Y, Cu, Zn, Ba, B, Cr, Si, Ga, P, Sb, and Nb; and x satisfies 0.005<x<0.5.)

In addition thereto, the cathode material may be, for example, an oxide, a disulfide, a chalcogenide, an electrically-conductive polymer, or the like. Examples of the oxide may include titanium oxide, vanadium oxide, and manganese dioxide. Examples of the disulfide may include titanium disulfide and molybdenum sulfide. Examples of the chalcogenide may include niobium selenide. Examples of the electrically-conductive polymer may include sulfur, polyaniline, and polythiophene.

### [Anode]

The anode 22 has a configuration similar to that of the foregoing anode, and may have, for example, an anode active material layer 22B on both surfaces of an anode current collector 22A. Configurations of the anode current collector 22A and the anode active material layer 22B are similar to the configurations of the anode current collector 1 and the anode active material layer 2. The chargeable capacity of the anode material capable of inserting and extracting lithium ions may be preferably larger than the discharging capacity of the cathode 21 in order to prevent Li metal from being unintentionally precipitated at the time of charge and discharge.

As illustrated in FIG. 9, the cathode active material layer 21B may be provided, for example, in part (such as a central region in a longitudinal direction) of the surface of the cathode current collector 21 A. In contrast, the anode active material layer 22B may be provided, for example, on the whole surface of the anode current collector 22A. Thereby, out of the anode current collector 22A, the anode active material layer 22B is provided in a region (an opposed region R1) opposed to the cathode active material layer 21B, and a region (a non-opposed region R2) not opposed to the cathode active material layer 21B. In this case, out of the anode active material layer 22B, a portion provided in the opposed region R1 has a role in charge and discharge, while a portion provided in the non-opposed region R2 is less likely to have a role in charge and discharge. It is to be noted that in FIG. 9, the cathode active material layer 21 B and the anode active material layer 22B are shown shaded.

As described above, the anode active material 200 (see FIG. 2) contained in the anode active material layer 22B includes the core section 201 and the covering section 202. However, since the anode active material layer 22B may be deformed or broken due to expansion and shrinkage at the time of charge and discharge, formation states of the core section 201 and the covering section 202 may be changed from those at the time of forming the anode active material layer 22B. However, in the non-opposed region R2, the formation state of the anode active material layer 22B is retained being little-affected by charge and discharge. Therefore, with regard to the foregoing conditions such as presence or absence of the core section 201 and the covering section 202, the compositions (atoms x and y), and presence or absence of the voids (the carbon-containing material), the anode active material 22B in the non-opposed region R2 may be preferably examined. One reason for this is that, in this case, states of the core section 201 and the covering section 202 are allowed to be accurately examined reproducibly without depending on a charge-discharge history (such as presence or absence of charge and discharge and the number of charge and discharge).

The maximum utilization rate (hereinafter simply referred to as "anode utilization rate") in a full-charged state of the anode 22 is not particularly limited, and may be arbitrarily set according to the ratio between the capacity of the cathode 21 and the capacity of the anode 22.

The foregoing "anode utilization rate" is expressed by [utilization rate Z (%)=(X/Y)×100], where X represents an insertion amount of lithium ions per unit area in a full-charged state of the anode 22, and Y represents an amount of lithium ions capable of being electrochemically inserted per unit area of the anode 22.

The insertion amount X may be obtained, for example, by the following procedure. First, a secondary battery is charged until the secondary battery becomes in a full-charged state. Thereafter, the secondary battery is disassembled, and a portion (an inspection anode) opposed to the cathode 21 out of the anode 22 is cut out. Subsequently, with the use of the inspection anode, an evaluation battery in which metal lithium is a counter electrode is assembled. Finally, the evaluation battery is discharged to measure the discharging capacity at the time of initial discharge, and thereafter, the discharging capacity is divided by the area of the inspection anode, and thereby, the insertion amount X is calculated. In this case, the term "discharge" refers to electrical conduction in a direction in which lithium ions are discharged from the inspection anode. For example, constant current discharge may be performed at current density of 0.1 mA/cm² until the battery voltage reaches 1.5 V.

In contrast, the insertion amount Y may be calculated, for example, as follows. The foregoing discharged evaluation battery is subjected to constant-current and constant-voltage charge until the battery voltage reaches 0 V to measure a charging capacity, and thereafter, the charging capacity is divided by the area of the inspection anode to obtain the insertion amount Y In this case, the term "charge" refers to electrical conduction in a direction in which lithium ions are inserted in the inspection anode. For example, constant voltage charge is performed at current density of 0.1 mA/cm² and at a battery voltage of 0 V until the current density reaches 0.02 mA/cm².

In particular, the anode utilization rate may be preferably from 35% to 80% both inclusive, since thereby, superior initial charge-discharge characteristics, superior cycle characteristics, superior load characteristics, and the like are obtained.

### [Separator]

The separator 23 separates the cathode 21 from the anode 22, and passes lithium ions while preventing current short circuit resulting from contact of both electrodes. The separator 23 may be a porous film made, for example, of a synthetic resin, ceramics, or the like. The separator 23 may be a laminated film in which two or more types of porous films are laminated. Examples of the synthetic resin may include polytetrafluoroethylene, polypropylene, and polyethylene.

### [Electrolytic Solution]

The separator 23 is impregnated with an electrolytic solution as a liquid electrolyte. In the electrolytic solution, an electrolyte salt is dissolved in a solvent. The electrolytic solution may contain other materials such as an additive as necessary.

The solvent may contain, for example, one or more of non-aqueous solvents such as an organic solvent. Examples of the non-aqueous solvents may include ethylene carbonate, propylene carbonate, butylene carbonate, dimethyl carbonate, diethyl carbonate, ethyl methyl carbonate, methylpropyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethylacetate, ethyl trimethylacetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate, and dimethyl sulfoxide. Thereby, a superior battery capacity, superior cycle characteristics, superior conservation characteristics, and the like are obtained.

In particular, at least one of ethylene carbonate, propylene carbonate, dimethyl carbonate, diethyl carbonate, and ethyl methyl carbonate may be preferable, since thereby, further superior characteristics are obtained. In this case, a combination of a high viscosity (high dielectric constant) solvent (for example, specific dielectric constant ε≥30) such as ethylene carbonate and propylene carbonate and a low viscosity solvent (for example, viscosity≤1 mPa·s) such as dimethyl carbonate, ethylmethyl carbonate, and diethyl carbonate may be more preferable. One reason for this is that the dissociation property of the electrolyte salt and ion mobility are improved.

In particular, the solvent may preferably contain an unsaturated carbon-coupled cyclic ester carbonate, since thereby, a stable film is formed on the surface of the anode 22 at the time of charge and discharge, and therefore, a decomposition reaction of the electrolytic solution is suppressed. The foregoing "unsaturated carbon-coupled cyclic ester carbonate" refers to a cyclic ester carbonate having one or more unsaturated carbon bonds (having an unsaturated carbon bond introduced in any location). Examples of the unsaturated carbon-coupled cyclic ester carbonate may include vinylene carbonate, vinylethylene carbonate, and methyleneethylene carbonate. The content of the unsaturated carbon-coupled cyclic ester carbonate in the solvent is not particularly limited, and may be, for example, from 0.01 wt% to 10 wt% both inclusive.

Further, the solvent may preferably contain at least one of a halogenated chain ester carbonate and a halogenated cyclic ester carbonate, since thereby, a stable film is formed on the surface of the anode 22 at the time of charge and discharge, and therefore, a decomposition reaction of the electrolytic solution is suppressed. The foregoing "halogenated chain ester carbonate" refers to a chain ester carbonate containing a halogen as a constituent element (at least one hydrogen is substituted by a halogen). The foregoing "halogenated cyclic ester carbonate" refers to a cyclic ester carbonate containing a halogen as a constituent element (at least one hydrogen is substituted by a halogen).

Although halogen types are not particularly limited, in particular, F, Cl, or Br may be preferable, and F may be more preferable. One reason for this is that, in this case, higher effects are obtained than other halogens. The number of halogens may be more preferably two than one, and may be three or more. One reason for this is that, in this case, an ability to form a protective film is improved, and a more rigid and more stable film is formed, and therefore, a decomposition reaction of the electrolytic solution is further suppressed.

Examples of the halogenated chain ester carbonate may include fluoromethyl methyl carbonate, bis (fluoromethyl) carbonate, and difluoromethyl methyl carbonate. Examples of the halogenated cyclic ester carbonate may include 4-fluoro-1,3-dioxolane-2-one and 4,5-difluoro-1,3-dioxolane-2-one. The halogenated cyclic ester carbonate may include a geometric isomer. Each of the contents of the halogenated chain ester carbonate and the halogenated cyclic ester carbonate in the solvent is not particularly limited, and may be, for example, from 0.01 wt% to 50 wt% both inclusive.

Further, the solvent may preferably contain a sultone (a cyclic sulfonic ester), since the chemical stability of the electrolytic solution is more improved thereby. Examples of the sultone may include propane sultone and propene sultone. The sultone content in the solvent is not particularly limited, and may be, for example, from 0.5 wt% to 5 wt% both inclusive.

Further, the solvent may preferably contain an acid anhydride since thereby, the chemical stability of the electrolytic solution is improved. Examples of the acid anhydride may include a carboxylic anhydride, a disulfonic anhydride, and a carboxylic acid sulfonic acid anhydride. Examples of the carboxylic anhydride may include a succinic anhydride, a glutaric anhydride, and a maleic anhydride. Examples of the disulfonic anhydride may include an ethane disulfonic anhydride and a propane disulfonic anhydride. Examples of the carboxylic acid sulfonic acid anhydride may include a sulfobenzoic anhydride, a sulfopropionic anhydride, and a sulfobutyric anhydride. The content of the acid anhydride in the solvent is not particularly limited, and may be, for example, from 0.5 wt% to 5 wt% both inclusive.

The electrolyte salt may contain, for example, one or more of light metal salts such as a lithium salt. Examples of the lithium salts may include LiPF₆, LiBF₄, LiClO₄, LiAsF₆, LiB(C₆H₅)₄, LiCH₃SO₃, LiCF₃SO₃, LiAlCl₄, Li₂SiF₆, LiCl, and LiBr. However, examples of the lithium salts may also include other types of lithium salts. Thereby, a superior battery capacity, superior cycle characteristics, superior conservation characteristics, and the like are obtained.

In particular, one or more of LiPF₆, LiBF₄, LiClO₄, and LiAsF₆ may be preferable, LiPF₆ or LiBF₄ may be preferable, and LiPF₆ may be more preferable, since thereby, the internal resistance is lowered, and therefore, more superior characteristics are obtained.

The content of the electrolyte salt may be preferably from 0.3 mol/kg to 3.0 mol/kg both inclusive with respect to the solvent, since thereby, high ion conductivity is obtained.

### [Operation of Secondary Battery]

In the square-type secondary battery, for example, lithium ions extracted from the cathode 21 are inserted in the anode 22 through the electrolytic solution at the time of charge, while lithium ions extracted from the anode 22 are inserted in the cathode 21 through the electrolytic solution at the time of discharge.

### [Method of Manufacturing Secondary Battery]

The secondary battery may be manufactured, for example, by the following procedure.

Upon fabricating the cathode 21, first, a cathode active material is mixed with a cathode binder, a cathode electric conductor, and the like as necessary to prepare a cathode mixture. Thereafter, the cathode mixture is dispersed in an organic solvent or the like to obtain paste cathode mixture slurry. Subsequently, the cathode current collector 21A is coated with the cathode mixture slurry with the use of a coating device such as a doctor blade and a bar coater, and the cathode mixture slurry is dried to form the cathode active material layer 21B. Finally, the cathode active material layer 21B is compression-molded with the use of a roll pressing machine and/or the like on heating as necessary. In this case, compression-molding may be repeated several times.

Upon fabricating the anode 22, for example, the anode active material layer 22B is formed on the anode current collector 22A by a procedure similar to that of the foregoing anode.

Upon fabricating the battery element 20, first, the cathode lead 24 is attached to the cathode current collector 21A with the use of a welding method and/or the like, and the anode lead 25 is attached to the anode current collector 22A with the use of a welding method and/or the like. Subsequently, the cathode 21 and the anode 22 are layered with the separator 23 in between and are spirally wound in the longitudinal direction. Finally, the resultant spirally-wound body is shaped to obtain a flat shape.

Upon assembling the secondary battery, first, the battery element 20 is contained in the battery can 11, and thereafter, the insulating plate 12 is laid on the battery element 20. Subsequently, the cathode lead 24 is attached to the cathode pin 15 with the use of a welding method and/or the like, and the anode lead 25 is attached to the battery can 11 with the use of a welding method and/or the like. In this case, the battery cover 13 is fixed to the open end of the battery can 11 with the use of a laser welding method and/or the like. Finally, an electrolytic solution is injected into the battery can 11 from the injection hole 19, the separator 23 is impregnated with the electrolytic solution, and thereafter, the injection hole 19 is sealed by the sealing member 19A.

### [Function and Effect of Secondary Battery]

According to the square-type secondary battery, since the anode 22 has a configuration similar to that of the foregoing anode, superior battery characteristics are obtainable. Other effects are similar to those of the anode.

### <2-2. Cylindrical-Type>

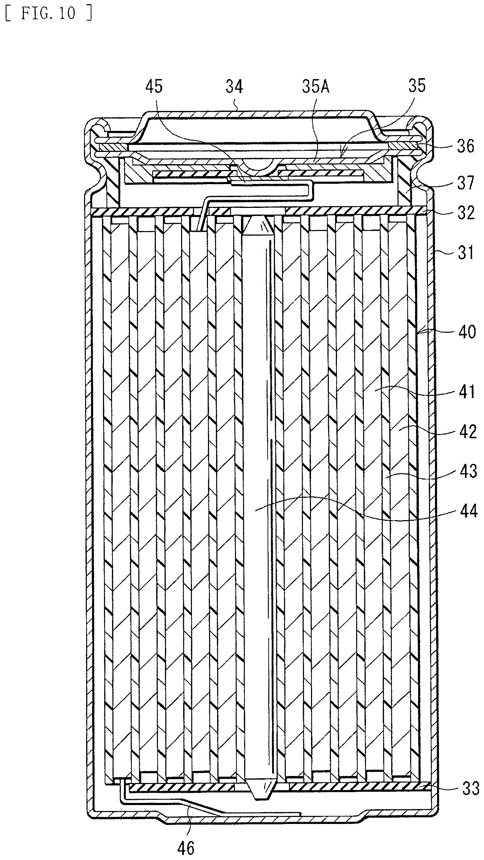

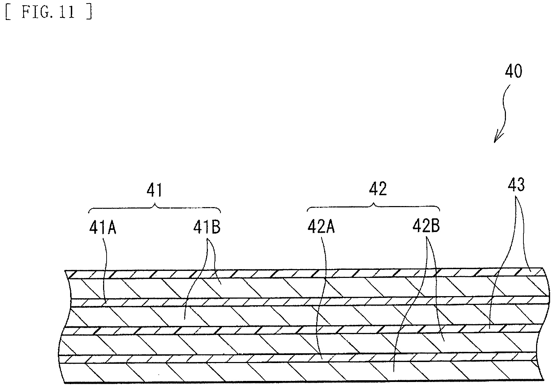

FIG. 10 and FIG. 11 illustrate cross-sectional configurations of a cylindrical-type secondary battery. FIG. 11 illustrates enlarged part of a spirally wound electrode body 40 illustrated in FIG. 10. In the following description, the components of the above-described square-type secondary battery will be used as appropriate.

### [Configuration of Secondary Battery]

In the cylindrical-type secondary battery, the spirally wound electrode body 40 and a pair of insulating plates 32 and 33 are mainly contained inside a battery can 31 in the shape of a hollow cylinder. The spirally wound electrode body 40 is a spirally-wound laminated body in which a cathode 41 and an anode 42 are laminated with a separator 43 in between, and are spirally wound.

The battery can 31 may have, for example, a hollow structure in which one end of the battery can 31 is closed and the other end of the battery can 31 is opened. The battery can 31 may be made, for example, of a material similar to that of the battery can 11. The pair of insulating plates 32 and 33 is arranged to sandwich the spirally wound electrode body 40 in between, and to extend perpendicularly to the spirally wound periphery surface of the spirally wound electrode body 40.

At the open end of the battery can 31, a battery cover 34, a safety valve mechanism 35, and a positive temperature coefficient element (PTC element) 36 are attached by being swaged with a gasket 37. Thereby, the battery can 31 is hermetically sealed. The battery cover 34 may be made, for example, of a material similar to that of the battery can 31. The safety valve mechanism 35 and the PTC element 36 are provided inside the battery cover 34. The safety valve mechanism 35 is electrically connected to the battery cover 34 through the PTC element 36. In the safety valve mechanism 35, in the case where the internal pressure becomes a certain level or more by internal short circuit, external heating, or the like, a disk plate 35A inverts to cut electric connection between the battery cover 34 and the spirally wound electrode body 40. The PTC element 36 prevents abnormal heat generation resulting from a large current by increased resistance associated with increase in temperature. The gasket 37 may be made, for example, of an insulating material. The surface of the gasket 37 may be coated with asphalt.

In the center of the spirally wound electrode body 40, a center pin 44 may be inserted. A cathode lead 45 made of an electrically-conductive material such as Al may be connected to the cathode 41. An anode lead 46 made of an electrically-conductive material such as Ni may be connected to the anode 42. For example, the cathode lead 45 may be welded to the safety valve mechanism 35, and may be electrically connected to the battery cover 34. For example, the anode lead 46 may be welded to the battery can 31.

The cathode 41 may have, for example, a cathode active material layer 41B on both surfaces of a cathode current collector 41A. The anode 42 has a configuration similar to that of the foregoing anode, and may have, for example, an anode active material layer 42B on both surfaces of an anode current collector 42A. The configurations of the cathode current collector 41 A, the cathode active material layer 41B, the anode current collector 42A, the anode active material layer 42B, and the separator 43 are similar to the configurations of the cathode current collector 21 A, the cathode active material layer 21B, the anode current collector 22A, the anode active material layer 22B, and the separator 23 respectively. Further, the composition of the electrolytic solution with which the separator 43 is impregnated is similar to the composition of the electrolytic solution in the square-type-secondary battery.

### [Operation of Secondary Battery]

In the cylindrical-type secondary battery, for example, lithium ions extracted from the cathode 41 are inserted in the anode 42 through the electrolytic solution at the time of charge, and lithium ions extracted from the anode 42 are inserted in the cathode 41 through the electrolytic solution at the time of discharge.

### [Method of Manufacturing Secondary Battery]

The cylindrical-type secondary battery may be manufactured, for example, by the following procedure. First, for example, the cathode active material layer 41 B is formed on both surfaces of the cathode current collector 41A to form the cathode 41, and the anode active material layer 42B is formed on both surfaces of the anode current collector 42A to form the anode 42 by a fabrication procedure similar to that of the cathode 21 and the anode 22. Subsequently, the cathode lead 45 is attached to the cathode 41 with the use of a welding method and/or the like, and the anode lead 46 is attached to the anode 42 with the use of a welding method and/or the like. Subsequently, the cathode 41 and the anode 42 are laminated with the separator 43 in between and are spirally wound to fabricate the spirally wound electrode body 40. Thereafter, in the center of the spirally wound electrode body, the center pin 44 is inserted. Subsequently, the spirally wound electrode body 40 is sandwiched between the pair of insulating plates 32 and 33, and is contained in the battery can 31. In this case, the cathode lead 45 is attached to the safety valve mechanism 35 with the use of a welding method and/or the like, and an end tip of the anode lead 46 is attached to the battery can 31 with the use of a welding method and/or the like. Subsequently, the electrolytic solution is injected into the battery can 31, and the separator 43 is impregnated with the electrolytic solution. Finally, the battery cover 34, the safety valve mechanism 35, and the PTC element 36 are attached to the open end of the battery can 31, and are fixed by being swaged with the gasket 37.

### [Function and Effect of Secondary Battery]

According to the cylindrical-type secondary battery, the anode 42 has a configuration similar to that of the foregoing anode. Therefore, effects similar to those of the square-type secondary battery are obtainable.

### <2-3. Laminated-Film-Type>

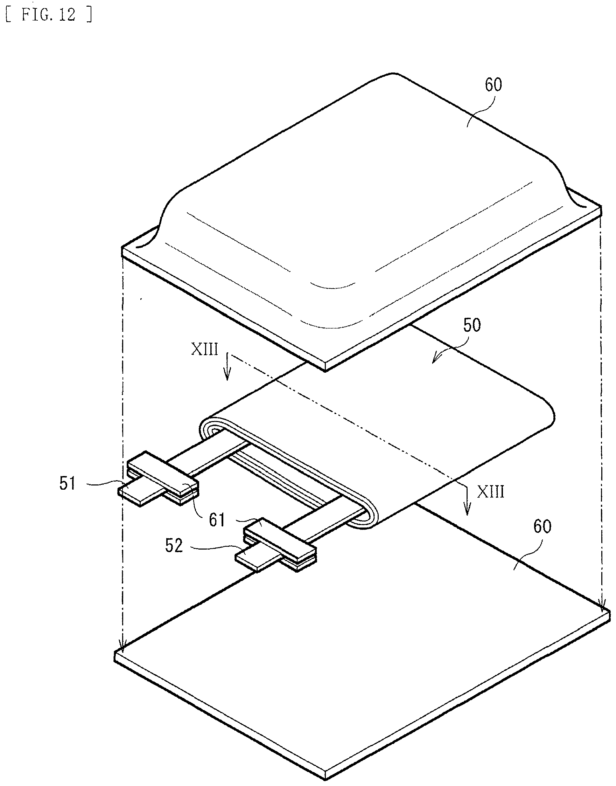

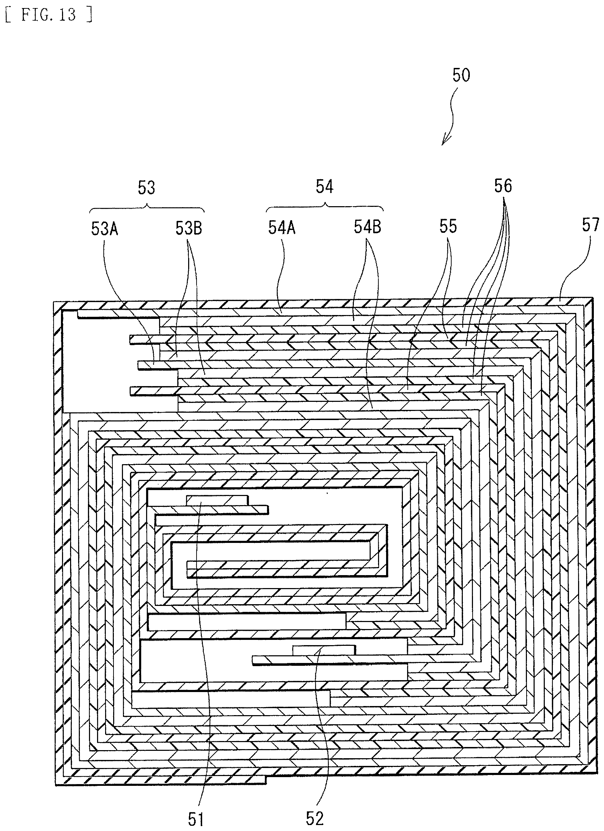

FIG. 12 illustrates an exploded perspective configuration of a laminated-film-type secondary battery. FIG. 13 illustrates an enlarged cross-section taken along a line XIII-XIII of a spirally wound electrode body 50 illustrated in FIG. 12.

### [Configuration of Secondary Battery]

In the laminated-film-type secondary battery, the spirally wound electrode body 50 is mainly contained in a film-like outer package member 60. The spirally wound electrode body 50 is a spirally-wound laminated body in which a cathode 53 and an anode 54 are laminated with a separator 55 and an electrolyte layer 56 in between, and are spirally wound. A cathode lead 51 is attached to the cathode 53, and an anode lead 52 is attached to the anode 54. The outermost periphery of the spirally wound electrode body 50 is protected by a protective tape 57.

The cathode lead 51 and the anode lead 52 may be, for example, led out from inside to outside of the outer package member 60 in the same direction. The cathode lead 51 may be made, for example, of an electrically-conductive material such as Al. The anode lead 52 may be made, for example, of an electrically-conducive material such as Cu, Ni, and stainless steel. These materials may be in the shape, for example, of a thin plate or mesh.

The outer package member 60 may be a laminated film in which, for example, a fusion bonding layer, a metal layer, and a surface protective layer are laminated in this order. In the laminated film, for example, outer edges of the two film-like fusion bonding layers are fusion-bonded or attached to each other by an adhesive or the like so that the fusion bonding layers and the spirally wound electrode body 50 are opposed to each other. Examples of the fusion bonding layer may include a film made of polyethylene, polypropylene, or the like. Examples of the metal layer may include an Al foil. Examples of the surface protective layer may include a film made of nylon, polyethylene terephthalate, or the like.

In particular, as the outer package member 60, an aluminum laminated film in which a polyethylene film, an aluminum foil, and a nylon film are laminated in this order may be preferable. However, the outer package member 60 may be made of a laminated film having other laminated structure, a polymer film such as polypropylene, or a metal film.

An adhesive film 61 to protect from outside air intrusion is inserted between the outer package member 60 and the cathode lead 51 and between the outer package member 60 and the anode lead 52. The adhesive film 61 is made of a material having adhesibility with respect to the cathode lead 51 and the anode lead 52. Examples of the material having adhesibility may include a polyolefin resin such as polyethylene, polypropylene, modified polyethylene, and modified polypropylene.

The cathode 53 may have, for example, a cathode active material layer 53B on both surfaces of a cathode current collector 53A. The anode 54 has a configuration similar to that of the foregoing anode, and may have, for example, an anode active material layer 54B on both surfaces of an anode current collector 54A. The configurations of the cathode current collector 53A, the cathode active material layer 53B, the anode current collector 54A, and the anode active material layer 54B are similar to the configurations of the cathode current collector 21A, the cathode active material layer 21B, the anode current collector 22A, and the anode active material layer 22B, respectively. Further, the configuration of the separator 55 is similar to the configuration of the separator 23.

In the electrolyte layer 56, an electrolytic solution is supported by a polymer compound. The electrolyte layer 56 may contain other material such as an additive as necessary. The electrolyte layer 56 is a so-called gel electrolyte. The gel electrolyte may be preferable, since thereby, high ion conductivity (such as 1 mS/cm or more at room temperature) is obtained and liquid leakage of the electrolytic solution is prevented.

The polymer compound may contain, for example, one or more of polyacrylonitrile, polyvinylidene fluoride, polytetrafluoroethylene, polyhexafluoropropylene, polyethylene oxide, polypropylene oxide, polyphosphazene, polysiloxane, polyvinyl fluoride, polyvinyl acetate, polyvinyl alcohol, polymethacrylic acid methyl, polyacrylic acid, polymethacrylic acid, styrene-butadiene rubber, nitrile-butadiene rubber, polystyrene, polycarbonate, and a copolymer of vinylidene fluoride and hexafluoro propylene. In particular, polyvinylidene fluoride or the copolymer of vinylidene fluoride and hexafluoro propylene may be preferable, since such a polymer compound is electrochemically stable.

For example, the composition of the electrolytic solution may be similar to the composition of the electrolytic solution in the square-type secondary battery. However, in the electrolyte layer 56 as a gel electrolyte, the term "solvent" of the electrolytic solution refers to a wide concept including not only a liquid solvent but also a material having ion conductivity capable of dissociating an electrolyte salt. Therefore, in the case where a polymer compound having ion conductivity is used, the polymer compound is also included in the solvent.

It is to be noted that the electrolytic solution may be used instead of the gel electrolyte layer 56. In this case, the separator 55 is impregnated with the electrolytic solution.

### [Operation of Secondary Battery]

In the laminated-film-type secondary battery, for example, at the time of charge, lithium ions extracted from the cathode 53 may be inserted in the anode 54 through the electrolyte layer 56. In contrast, for example, at the time of discharge, lithium ions extracted from the anode 54 may be inserted in the cathode 53 through the electrolyte layer 56.

### [Method of Manufacturing Secondary Battery]

The laminated-film type secondary battery including the gel electrolyte layer 56 may be manufactured, for example, by the following three types of procedures.

In the first procedure, first, the cathode 53 and the anode 54 are fabricated by a fabrication procedure similar to that of the cathode 21 and the anode 22. In this case, the cathode active material layer 53B is formed on both surfaces of the cathode current collector 53A to form the cathode 53, and the anode active material layer 54B is formed on both surfaces of the anode current collector 54A to form the anode 54. Subsequently, a precursor solution containing an electrolytic solution, a polymer compound, an organic solvent, and the like is prepared. Thereafter, the cathode 53 and the anode 54 are coated with the precursor solution to form the gel electrolyte layer 56. Subsequently, the cathode lead 51 is attached to the cathode current collector 53A with the use of a welding method and/or the like, and the anode lead 52 is attached to the anode current collector 54A with the use of a welding method and/or the like. Subsequently, the cathode 53 and the anode 54 that are provided with the electrolyte layer 56 are laminated with the separator 55 in between and are spirally wound to fabricate the spirally wound electrode body 50. Thereafter, the protective tape 57 is adhered to the outermost periphery thereof. Finally, after the spirally wound electrode body 50 is sandwiched between two pieces of film-like outer package members 60, the outer edges of the outer package members 60 are bonded with the use of a thermal fusion bonding method and/or the like. Thereby, the spirally wound electrode body 50 is enclosed into the outer package members 60. In this case, the adhesive films 61 are inserted between the cathode lead 51 and the outer package member 60 and between the anode lead 52 and the outer package member 60.

In the second procedure, first, the cathode lead 51 is attached to the cathode 53, and the anode lead 52 is attached to the anode 54. Subsequently, the cathode 53 and the anode 54 are laminated with the separator 55 in between and are spirally wound to fabricate a spirally wound body as a precursor of the spirally wound electrode body 50. Thereafter, the protective tape 57 is adhered to the outermost periphery thereof. Subsequently, after the spirally wound body is arranged between two pieces of the film-like outer package members 60, the outermost peripheries except for one side are bonded with the use of a thermal fusion bonding method and/or the like to obtain a pouched state, and the spirally wound body is contained in the pouch-like outer package member 60. Subsequently, an electrolytic solution, a monomer as a raw material for the polymer compound, a polymerization initiator, and as necessary, other materials such as a polymerization inhibitor are mixed to prepare a composition for electrolyte. Subsequently, the composition for electrolyte is injected into the pouch-like outer package member 60. Thereafter, the opening of the outer package member 60 is hermetically sealed with the use of a thermal fusion bonding method and/or the like. Finally, the monomer is thermally polymerized to obtain a polymer compound. Accordingly, the gel electrolyte layer 56 is formed.

In the third procedure, first, the spirally wound body is fabricated and contained in the pouch-like outer package member 60 in a manner similar to that of the foregoing second procedure, except that the separator 55 with both surfaces coated with a polymer compound is used. Examples of the polymer compound with which the separator 55 is coated may include a polymer (such as a homopolymer, a copolymer, and a multicomponent copolymer) containing vinylidene fluoride as a component. Specific examples thereof may include polyvinylidene fluoride, a binary copolymer containing vinylidene fluoride and hexafluoro propylene as components, and a ternary copolymer containing vinylidene fluoride, hexafluoro propylene, and chlorotrifluoroethylene as components. It is to be noted that, in addition to the polymer containing vinylidene fluoride as a component, other one or more polymer compounds may be used. Subsequently, an electrolytic solution is prepared and injected into the outer package member 60. Thereafter, the opening of the outer package member 60 is hermetically sealed with the use of a thermal fusion bonding method and/or the like. Finally, the resultant is heated while a weight is applied to the outer package member 60, and the separator 55 is adhered to the cathode 53 and the anode 54 with the polymer compound in between. Thereby, the polymer compound is impregnated with the electrolytic solution, and accordingly, the polymer compound is gelated to form the electrolyte layer 56.

In the third procedure, swollenness of the battery is suppressed more than in the first procedure. Further, in the third procedure, the monomer as a raw material of the polymer compound, the organic solvent, and the like are less likely to be left in the electrolyte layer 56 compared to in the second procedure. Therefore, the formation step of the polymer compound is favorably controlled. Thereby, the cathode 53, the anode 54, and the separator 55 sufficiently adhere to the electrolyte layer 56.

### [Function and Effect of Secondary Battery]

In the laminated-film-type secondary battery, the anode 54 has a configuration similar to that of the foregoing anode. Therefore, effects similar to those of the square-type secondary battery are obtainable.

### <3. Applications of Secondary Battery>

Next, description will be given of application examples of the foregoing secondary battery.

Applications of the secondary battery are not particularly limited as long as the secondary battery is applied to a machine, a device, an instrument, an apparatus, a system (collective entity of a plurality of devices and the like), or the like that is allowed to use the secondary battery as a driving electric power source, an electric power storage source for electric power storage, or the like. In the case where the secondary battery is used as an electric power source, the secondary battery used as an electric power source may be a main electric power source (electric power source used preferentially), or may be an auxiliary electric power source (electric power source used instead of a main electric power source or used being switched from the main electric power source). In the latter case, the main electric power source type is not limited to the secondary battery.

Examples of applications of the secondary battery may include portable electronic apparatuses such as a video camcorder, a digital still camera, a mobile phone, a notebook personal computer, a cordless phone, a headphone stereo, a portable radio, a portable television, and a personal digital assistant. However, electronic apparatuses are not limited to portable electronic apparatuses. Further examples thereof may include a mobile lifestyle electric appliance such as an electric shaver; a memory device such as a backup electric power source and a memory card; an electric power tool such as an electric drill and an electric saw; a battery pack used as an electric power source for a notebook personal computer or the like; a medical electronic apparatus such as a pacemaker and a hearing aid; an electric vehicle such as an electric automobile (including a hybrid automobile); and an electric power storage system such as a home battery system for storing electric power for emergency or the like. It goes without saying that an application other than the foregoing applications may be adopted.

In particular, the secondary battery is effectively applicable to the battery pack, the electric vehicle, the electric power storage system, the electric power tool, the electronic apparatus, or the like. One reason for this is that, in these applications, since superior battery characteristics are demanded, performance is effectively improved with the use of the secondary battery according to the present technology. It is to be noted that the battery pack is an electric power source using a secondary battery, and is a so-called assembled battery or the like. The electric vehicle is a vehicle that works (runs) with the use of a secondary battery as a driving electric power source. As described above, the electric vehicle may be an automobile (such as a hybrid automobile) including a drive source other than a secondary battery. The electric power storage system is a system using a secondary battery as an electric power storage source. For example, in a home electric power storage system, since electric power is stored in the secondary battery as an electric power storage source, the electric power is consumed as necessary, and thereby, home electric products and the like become usable. The electric power tool is a tool in which a movable section (such as a drill) is moved with the use of a secondary battery as a driving electric power source. The electronic apparatus is an apparatus executing various functions with the use of a secondary battery as a driving electric power source.

Herein, description will be specifically given of some application examples of the secondary battery. It is to be noted that the configurations of the respective application examples explained below are merely examples, and may be changed as appropriate.

### <3-1. Battery Pack>

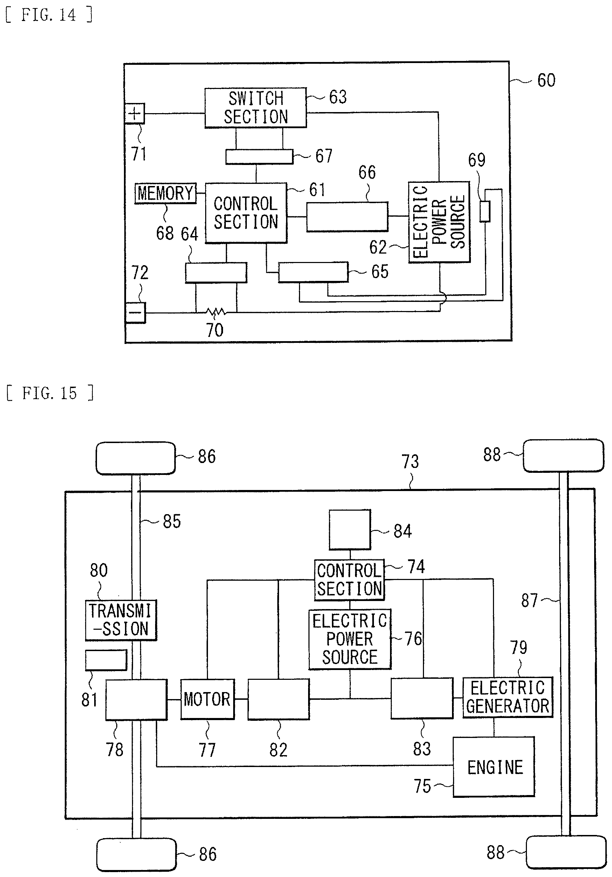

FIG. 14 illustrates a block configuration of a battery pack. For example, as illustrated in FIG. 14, the battery pack may include a control section 61, an electric power source 62, a switch section 63, a current measurement section 64, a temperature detection section 65, a voltage detection section 66, a switch control section 67, a memory 68, a temperature detection element 69, a current detection resistance 70, a cathode terminal 71, and an anode terminal 72 in a housing 60 made of a plastic material and/or the like.

The control section 61 controls an operation of the whole battery pack (including a usage state of the electric power source 62), and may include, for example, a central processing unit (CPU) and/or the like. The electric power source 62 includes one or more secondary batteries (not illustrated). The electric power source 62 may be, for example, an assembled battery including two or more secondary batteries. Connection type of these secondary batteries may be a series-connected type, may be a parallel-connected type, or a mixed type thereof. As an example, the electric power source 62 may include six secondary batteries connected in a manner of dual-parallel and three-series.

The switch section 63 switches the usage state of the electric power source 62 (whether or not the electric power source 62 is connectable to an external device) according to an instruction of the control section 61. The switch section 63 may include, for example, a charge control switch, a discharge control switch, a charging diode, a discharging diode, and the like (not illustrated). The charge control switch and the discharge control switch may each be, for example, a semiconductor switch such as a field-effect transistor (MOSFET) using a metal oxide semiconductor.

The current measurement section 64 measures a current with the use of the current detection resistance 70, and outputs the measurement result to the control section 61. The temperature detection section 65 measures temperature with the use of the temperature detection element 69, and outputs the measurement result to the control section 61. The temperature measurement result may be used for, for example, a case in which the control section 61 controls charge and discharge at the time of abnormal heat generation or a case in which the control section 61 performs a correction processing at the time of calculating a remaining capacity. The voltage detection section 66 measures a voltage of the secondary battery in the electric power source 62, performs analog-to-digital conversion on the measured voltage, and supplies the resultant to the control section 61.

The switch control section 67 controls operations of the switch section 63 according to signals inputted from the current measurement section 64 and the voltage detection section 66.

The switch control section 67 executes control so that a charging current is prevented from flowing in a current path of the electric power source 62 by disconnecting the switch section 67 (charge control switch) in the case where, for example, a battery voltage reaches an overcharge detection voltage. Thereby, in the electric power source 62, only discharge is allowed to be performed through the discharging diode. It is to be noted that, for example, in the case where a large current flows at the time of charge, the switch control section 67 blocks the charging current.

Further, the switch control section 67 executes control so that a discharging current is prevented from flowing in the current path of the electric power source 62 by disconnecting the switch section 67 (discharge control switch) in the case where, for example, a battery voltage reaches an overdischarge detection voltage. Thereby, in the electric power source 62, only charge is allowed to be performed through the charging diode. It is to be noted that, for example, in the case where a large current flows at the time of discharge, the switch control section 67 blocks the discharging current.

It is to be noted that, in the secondary battery, for example, the overcharge detection voltage may be 4.20 V±0.05 V, and the over-discharge detection voltage may be 2.4 V±0.1 V.

The memory 68 may be, for example, an EEPROM as a non-volatile memory or the like. The memory 68 may store, for example, numerical values calculated by the control section 61 and information of the secondary battery measured in a manufacturing step (such as an internal resistance in the initial state). It is to be noted that, in the case where the memory 68 stores a full charging capacity of the secondary battery, the control section 10 is allowed to comprehend information such as a remaining capacity.

The temperature detection element 69 measures temperature of the electric power source 62, and outputs the measurement result to the control section 61. The temperature detection element 69 may be, for example, a thermistor or the like.

The cathode terminal 71 and the anode terminal 72 are terminals connected to an external device (such as a notebook personal computer) driven using the battery pack or an external device (such as a battery charger) used for charging the battery pack. The electric power source 62 is charged and discharged through the cathode terminal 71 and the anode terminal 72.

### <3-2. Electric Vehicle>

FIG. 15 illustrates a block configuration of a hybrid automobile as an example of electric vehicles. For example, as illustrated in FIG. 15, the electric vehicle may include a control section 74, an engine 75, an electric power source 76, a driving motor 77, a differential 78, an electric generator 79, a transmission 80, a clutch 81, inverters 82 and 83, and various sensors 84 in a housing 73 made of metal. In addition thereto, the electric vehicle may include, for example, a front drive shaft 85 and a front tire 86 that are connected to the differential 78 and the transmission 80, a rear drive shaft 87, and a rear tire 88.

The electric vehicle may run with the use, for example, of one of the engine 75 and the motor 77 as a drive source. The engine 75 is a main power source, and may be, for example, a petrol engine. In the case where the engine 75 is used as a power source, drive power (torque) of the engine 75 may be transferred to the front tire 86 or the rear tire 88 through the differential 78, the transmission 80, and the clutch 81 as drive sections, for example. The torque of the engine 75 may also be transferred to the electric generator 79. Due to the torque, the electric generator 79 generates alternating-current electric power. The alternating-current electric power is converted into direct-current electric power through the inverter 83, and the converted power is stored in the electric power source 76. In contrast, in the case where the motor 77 as a conversion section is used as a power source, electric power (direct-current electric power) supplied from the electric power source 76 is converted into alternating-current electric power through the inverter 82. The motor 77 may be driven by the alternating-current electric power. Drive power (torque) obtained by converting the electric power by the motor 77 may be transferred to the front tire 86 or the rear tire 88 through the differential 78, the transmission 80, and the clutch 81 as the drive sections, for example.

It is to be noted that, alternatively, the following mechanism may be adopted. In the mechanism, when speed of the electric vehicle is reduced by an unillustrated brake mechanism, the resistance at the time of speed reduction is transferred to the motor 77 as torque, and the motor 77 generates alternating-current electric power by the torque. It may be preferable that the alternating-current electric power be converted to direct-current electric power through the inverter 82, and the direct-current regenerative electric power be stored in the electric power source 76.

The control section 74 controls operations of the whole electric vehicle, and, for example, may include a CPU and/or the like. The electric power source 76 includes one or more secondary batteries (not illustrated). Alternatively, the electric power source 76 may be connected to an external electric power source, and electric power may be stored by receiving the electric power from the external electric power source. The various sensors 84 may be used, for example, for controlling the number of revolutions of the engine 75 or for controlling opening level (throttle opening level) of an unillustrated throttle valve. The various sensors 84 may include, for example, a speed sensor, an acceleration sensor, an engine frequency sensor, and/or the like.

It is to be noted that the description has been given above of the hybrid automobile as an electric vehicle. However, examples of the electric vehicles may include a vehicle (electric automobile) working with the use of only the electric power source 76 and the motor 77 without using the engine 75.

### <3-3. Electric Power Storage System>

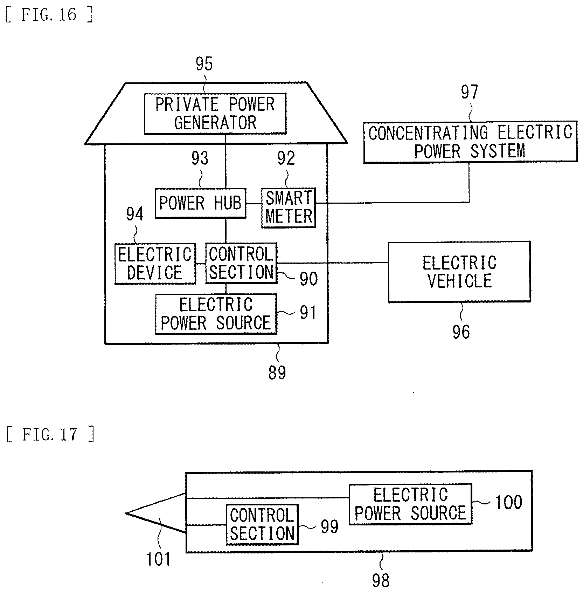

FIG. 16 illustrates a block configuration of an electric power storage system. For example, as illustrated in FIG. 16, the electric power storage system may include a control section 90, an electric power source 91, a smart meter 92, and a power hub 93 inside a house 89 such as a general residence and a commercial building.

In this case, the electric power source 91 may be connected to, for example, an electric device 94 arranged inside the house 89, and may be connected to an electric vehicle 96 parked outside the house 89. Further, for example, the electric power source 91 may be connected to a private power generator 95 arranged inside the house 89 through the power hub 93, and may be connected to an external concentrating electric power system 97 thorough the smart meter 92 and the power hub 93.

It is to be noted that the electric device 94 may include, for example, one or more home electric appliances such as a refrigerator, an air conditioner, a television, and a water heater. The private power generator 95 may be, for example, one or more of a solar power generator, a wind-power generator, and the like. The electric vehicle 96 may be, for example, one or more of an electric automobile, an electric motorcycle, a hybrid automobile, and the like. The concentrating electric power system 97 may be, for example, one or more of a thermal power plant, an atomic power plant, a hydraulic power plant, a wind-power plant, and the like.

The control section 90 controls an operation of the whole electric power storage system (including a usage state of the electric power source 91), and, for example, may include a CPU and/or the like. The electric power source 91 includes one or more secondary batteries (not illustrated). The smart meter 92 may be, for example, an electric power meter compatible with a network arranged in the house 89 demanding electric power, and may be communicable with an electric power supplier. Accordingly, for example, while the smart meter 92 communicates with outside as necessary, the smart meter 92 controls the balance between supply and demand in the house 89 and allows effective and stable energy supply.

In the electric power storage system, for example, electric power may be stored in the electric power source 91 from the concentrating electric power system 97 as an external electric power source through the smart meter 92 and the power hub 93, and electric power may be stored in the electric power source 91 from the private power generator 95 as an independent electric power source through the power hub 93. The electric power stored in the electric power source 91 is supplied to the electric device 94 or to the electric vehicle 96 as necessary according to an instruction of the control section 90. Therefore, the electric device 94 becomes operable, and the electric vehicle 96 becomes chargeable. That is, the electric power storage system is a system capable of storing and supplying electric power in the house 89 with the use of the electric power source 91.

The electric power stored in the electric power source 91 is arbitrarily usable. Therefore, for example, electric power is allowed to be stored in the electric power source 91 from the concentrating electric power system 97 in the middle of the night when an electric rate is inexpensive, and the electric power stored in the electric power source 91 is allowed to be used during daytime hours when an electric rate is expensive.

It is to be noted that the foregoing electric power storage system may be arranged for each household (family unit), or may be arranged for a plurality of households (family units).

### <3-4. Electric Power Tool>

FIG. 17 illustrates a block configuration of an electric power tool. For example, as illustrated in FIG. 17, the electric power tool may be an electric drill, and may include a control section 99 and an electric power source 100 in a tool body 98 made of a plastic material and/or the like. For example, a drill section 101 as a movable section may be attached to the tool body 98 in an operable (rotatable) manner.

The control section 99 controls operations of the whole electric power tool (including a usage state of the electric power source 100), and may include, for example, a CPU and/or the like. The electric power source 100 includes one or more secondary batteries (not illustrated). The control section 99 allows electric power to be supplied from the electric power source 100 to the drill section 101 as necessary according to an operation of an unillustrated operation switch to operate the drill section 101.

### Examples

### Examples according to the present technology will be described in detail.

### (Examples 1-1 to 1-21, Examples 1-1 and 1-16 to 1-18 are Comparative Examples)

The laminated-film-type secondary battery illustrated in FIG. 12 and FIG. 13 was fabricated by the following procedure.

Upon fabricating the cathode 53, first, 91 parts by mass of a cathode active material (LiCoO₂), 6 parts by mass of a cathode electric conductor (graphite), and 3 parts by mass of a cathode binder (polyvinylidene fluoride: PVDF) were mixed to obtain a cathode mixture. Subsequently, the cathode mixture was dispersed in an organic solvent (N-methyl-2-pyrrolidone: NMP) to obtain paste cathode mixture slurry. Subsequently, both surfaces of the cathode current collector 53A (a strip-shaped Al foil being 12 µm thick) were coated with the cathode mixture slurry uniformly with the use of a coating device, and the applied cathode mixture slurry was dried to form the cathode active material layer 53B. Finally, the cathode active material layer 53B was compression-molded with the use of a roll pressing machine. In this case, the thickness of the cathode active material layer 53B was adjusted so that Li metal was not precipitated on the anode 54 at the time of full charge.

Upon fabricating the anode 54, first, a highly-crystalline core section (SiOₓ: the median diameter D50: 4 µm) was obtained with the use of a gas atomization method. In this case, the composition (the atom ratio x) was controlled by adjusting an introduction amount of O₂ at the time of fusing and solidifying the raw material (Si). Physical properties of the core section were the half bandwidth of 0.6 deg and the crystallite size of 90 nm. Subsequently, as necessary, a noncrystalline covering section (SiOy) was formed on the surface of the core section with the use of a powder evaporation method. In this case, the composition (the atom ratio y) was controlled by adjusting an introduction amount of O₂ or H₂ at the time of depositing the raw material (Si). In the powder evaporation method, a resistance heating source and an induction heating source were used, the deposition rate was 2 nm/sec, and a vacuum state (pressure: 1Ω10⁻³ Pa) was obtained with the use of a turbo-molecular pump. In particular, as necessary, while the core section was rotated with the use of a shutter mechanism, evaporation process was performed intermittently from multiple directions, and thereby, the lamination structure of the covering section became a multi-layer structure. Subsequently, a carbon-containing material (C) was formed in voids of the covering section with the use of a thermal decomposition CVD method (carbon source gas: methane gas). Configurations of the core section, the covering section, and the carbon-containing material were as illustrated in FIG. 1.

Subsequently, an anode active material and a precursor of an anode binder were mixed at a dry weight ratio of 90:10, and thereafter, the resultant mixture was diluted with NMP to obtain paste anode mixture slurry. The precursor of the anode binder was polyamic acid containing NMP and N,N-dimethylacetoamide (DMAC). Subsequently, both surfaces of the anode current collector 54A (a rolled Cu foil being 15 µm thick) were coated with the anode mixture slurry with the use of a coating device, and the applied anode mixture slurry was dried. Finally, in order to improve binding characteristics, the coated film was thermally pressed, and thereafter, the coated film was fired (at 400 deg C for 1 hour) in the vacuum atmosphere. Thereby, the anode binder (polyimide) was formed, and therefore, the anode active material layer 54B containing the anode active material and the anode binder was formed. It is to be noted that the thickness of the anode active material layer 54B was adjusted so that the anode utilization ratio became 65%.

Upon preparing an electrolytic solution, an electrolyte salt (LiPF₆) was dissolved in a solvent (ethylene carbonate (EC) and diethyl carbonate (DEC)). In this case, the composition of the solvent was EC:DEC=50:50 at a weight ratio, and the content of the electrolyte salt was 1 mol/kg with respect to the solvent.

Upon assembling the secondary battery, first, the cathode lead 51 made of Al was welded to one end of the cathode current collector 53A, and the anode lead 52 made of Ni was welded to one end of the anode current collector 54A. Subsequently, the cathode 53, the separator 55, the anode 54, and the separator 55 were laminated in this order, the resultant laminated body was spirally wound in a longitudinal direction to form a spirally wound body as a precursor of the spirally wound electrode body 50. Thereafter, the spirally-winding end thereof was fixed by the protective tape 57 (an adhesive tape). As the separator 55, a multi-layer film (being 20 µm thick) in which a film containing multi-porous polyethylene as a main component was sandwiched between films containing multi-porous polypropylene as a main component was used. Subsequently, the spirally wound body was sandwiched between the outer package members 60, and subsequently, the outer edges other than one side of the outer package members 60 were thermally fusion-bonded, and thereby, the spirally wound body was contained into the pouch-like outer package members 60. In this case, as the outer package member 60, an aluminum laminated film in which a nylon film (being 30 µm thick), an Al foil (being 40 µm thick), and a non-stretched polypropylene film (being 30 µm thick) were laminated from outside was used. Subsequently, an electrolytic solution was injected from openings of the package members 60, the separator 55 was impregnated with the electrolytic solution, and thereby, the spirally wound electrode body 50 was fabricated. Finally, the openings of the package members 60 were thermally fusion-bonded in the vacuum atmosphere.

The initial charge-discharge characteristics and the cycle characteristics of the secondary battery were examined. Results illustrated in Table 1 were obtained.

Upon examining the initial charge-discharge characteristics, first, in order to stabilize the battery state, one cycle of charge and discharge was performed on the secondary battery in the ambient temperature environment (23 deg C). Subsequently, the secondary battery was charged again in the same atmosphere to measure a charging capacity, and thereafter, the secondary battery was discharged to measure a discharging capacity. Finally, [initial efficiency (%)=(discharging capacity/charging capacity)×100] was calculated. At the time of charge, charge was performed at constant current density of 3 mA/cm² until the voltage reached 4.2 V, and charge was further performed at a constant voltage of 4.2 V until the current density reached 0.3 mA/cm². At the time of discharge, discharge was performed at constant current density of 3 mA/cm² until the voltage reached 2.5 V.

Upon examining the cycle characteristics, first, in order to stabilize the battery state, a secondary battery was charged and discharged one cycle. Thereafter, the secondary battery was charged and discharged again to measure the discharging capacity. Subsequently, the secondary battery was charged and discharged until the total number of cycles reached 100 cycles to measure the discharging capacity. Finally, [capacity retention ratio (%)=(discharging capacity at the 100th cycle/discharging capacity at the second cycle)×100] was calculated. Ambient temperature and charge-discharge conditions were similar to those of the case examining the charge-discharge characteristics.

**[Table 1]**

| Example | Core section (highly-crystalline) | | Covering section (noncrystalline) | | | | | | Carbon-containing material | | Initial efficiency (%) | Capacity retention ratio (%) |
|---|---|---|---|---|---|---|---|---|---|---|---|---|
| | Type | x | Type | y | Average thickness (nm) | Average coverage ratio (%) | Layer structure | Void diameter (nm) | Type | Ratio IG/ID | | |
| 1-1 | SiOₓ | 0.1 | SiO_{y} | 0.2 | 200 | 80 | Multilayer | 5 | C | 1.8 | 86 | 78 |
| 1-2 | | | | 0.5 | | | | | | | 85.5 | 81 |
| 1-3 | | | | 0.7 | | | | | | | 85 | 82 |
| 1-4 | | | | 1 | | | | | | | 84.8 | 83 |
| 1-5 | | | | 1.2 1.4 | | | | | | | 84.5 | 85 |
| 1-6 | | | | | | | | | | | 84 | 84 |
| 1-7 | | | | 1.8 | | | | | | | 83.6 | 82 |
| 1-8 | | | | 2 | | | | | | | 83 | 79 |
| 1-9 | SiOx | 0 | SiO_{y} | 1.2 | 200 | 80 | Multilayer | 5 | C | 1.8 | 85 | 84 |
| 1-10 | | 0.05 | | | | | | | | | 84.7 | 84.5 |
| 1-11 | | 0.2 | | | | | | | | | 83 | 84.8 |
| 1-12 | | 0.3 0.4 | | | | | | | | | 82.5 | 85 |
| 1-13 | | | | | | | | | | | 82 | 85.2 |
| 1-14 | | 0.45 | | | | | | | | | 81 | 85.4 |
| 1-15 | | 0.5 | | | | | | | | | 79.5 | 85.7 |
| 1-16 | | 0.6 | | | | | | | | | 78 | 85.9 |
| 1-17 | | 0.7 | | | | | | | | | 76 | 86 |
| 1-18 | | 0.8 | | | | | | | | | 75 | 86 |
| 1-19 | | 1 | | | | | | | | | 73 | 86 |
| 1-20 | SiOₓ | 0.1 | - | - | - | - | - | - | - | - | 90 | 35 |
| 1-21 | SiOₓ | 0.1 | SiO_{y} | 1.2 | 200 | 80 | Single layer | - | - | - | 83 | 68 |

In the case where a single-layer covering section was formed on the surface of the core section (Example 1-21), the capacity retention ratio was significantly increased while high initial efficiency was retained compared to the case in which the covering section was not formed (Example 1-20). Further, in the case where a covering section was formed, when the covering section had a multilayer structure and a carbon-containing material was formed (Examples 1-1 to 1-19), the capacity retention ratio was further significantly increased while high initial efficiency was retained similarly.

Further, in the case where a multilayer covering section was formed on the surface of the core section, when the atom ratio x of the core section satisfied 0≤x<0.5 and the atom ratio y of the covering section satisfied 0.5≤y≤1.8, higher initial efficiency and a higher capacity retention ratio were obtained.

### (Examples 2-1 to 2-10, Examples 2-1, 2-9 and 2-10 are Comparative Examples)

Secondary batteries were fabricated by a procedure similar to that of Example 1-5 except that crystallinity (the ratio IG/ID) of the carbon-containing material was changed as illustrated in Table 2, and the various characteristics were examined. In this case, the ratio IG/ID was adjusted by changing pressures, decomposition temperature, and types of gas at the time of forming the carbon-containing material.

**[Table 2]**

| Example | Core section (highly-crystalline) | | Covering section (noncrystalline) | | | | | | Carbon-containing material | | Initial efficiency (%) | Capacity retention ratio (%) |
|---|---|---|---|---|---|---|---|---|---|---|---|---|
| | Type | x | Type | y | Average thickness (nm) | Average coverage ratio (%) | Layer structure | Void diameter (nm) | Type | Ratio IG/ID | | |
| 2-1 | SiOₓ | 0.1 | SiO_{y} | 1.2 | 200 | 80 | Multilayer | 5 | C | 0.2 | 88 | 72.5 |
| 2-2 | | | | | | | | | | 0.3 | 88 | 80.2 |
| 2-3 | | | | | | | | | | 0.5 | 88 | 82.5 |
| 2-4 | | | | | | | | | | 1 | 87 | 84 |
| 2-5 | | | | | | | | | | 1.5 | 87 | 86 |
| 2-6 | | | | | | | | | | 2 | 85 | 85.5 |
| 2-7 | | | | | | | | | | 2.5 | 82 | 85.5 |
| 2-8 | | | | | | | | | | 3 | 79 | 84.5 |
| 2-9 | | | | | | | | | | 3.2 | 74 | 83.5 |
| 2-10 | | | | | | | | | | 3.5 | 73.5 | 79.4 |

In the case where the ratio IG/ID was from 0.3 to 3 both inclusive, higher initial efficiency and a higher capacity retention ratio were obtained.

### (Examples 3-1 to 3-10)

Secondary batteries were fabricated by a procedure similar to that of Example 1-5 except that the void diameter of the covering section was changed as illustrated in Table 3, and the various characteristics were examined. In this case, the void diameter was adjusted by discontinuously changing an angle of the core section with respect to evaporation current at the time of forming the covering section.

**[Table 3]**

| Example | Core section (highly-crystalline) | | Covering section (noncrystalline) | | | | | | Carbon-containing material | | Initial efficiency (%) | Capacity retention ratio (%) |
|---|---|---|---|---|---|---|---|---|---|---|---|---|
| | Type | x | Type | y | Average thickness (nm) | Average coverage ratio (%) | Layer structure | Void diameter (nm) | Type | Ratio IG/ID | | |
| 3-1 | SiOₓ | 0.1 | SiO_{y} | 1.2 | 200 | 80 | Multilayer | 0.7 | C | 1.8 | 81 | 84 |
| 3-2 | | | | | | | | 1 | | | 83 | 84.1 |
| 3-3 | | | | | | | | 3 | | | 84.3 | 84.8 |
| 3-4 | | | | | | | | 10 | | | 84.5 | 85 |
| 3-5 | | | | | | | | 50 | | | 84.5 | 85 |
| 3-6 | | | | | | | | 75 | | | 84.5 | 84.7 |
| 3-7 | | | | | | | | 100 | | | 84.6 | 84.4 |
| 3-8 | | | | | 800 | | | 500 | | | 84.8 | 84.5 |
| 3-9 | | | | | 1000 | | | 500 | | | 84.7 | 84 |
| 3-10 | | | | | 1000 | | | 700 | | | 84.9 | 84 |

In the case where the void diameter was equal to or less than 500 nm, or more specifically, equal to or less than 50 nm, higher initial efficiency and a higher capacity retention ratio were obtained, and a higher battery capacity was obtained.

### (Examples 4-1 to 4-11)

Secondary batteries were fabricated by a procedure similar to that of Example 1-5 except that the median diameter (D50) of the core section was changed as illustrated in Table 4, and the various characteristics were examined. In this case, the median diameter (D50) of the core section was adjusted with the use of raw materials (Si) each having a different median diameter (D50).

**[Table 4]**

| Example | Core section (highly-crystalline) | | | Covering section (noncrystalline) | | | | Initial efficiency (%) | Capacity retention ratio (%) |
|---|---|---|---|---|---|---|---|---|---|
| | Type | X | D50 (nm) | Type | y | Average thickness (nm) | Average coverage ratio (%) | | |
| 4-1 | SiOₓ | 0.1 | 0.08 | SiO_{y} | 1.2 | 200 | 80 | 83 | 85.3 |
| 4-2 | | | 0.1 | | | | | 85 | 86.8 |
| 4-3 | | | 0.2 | | | | | 85.8 | 86.8 |
| 4-4 | | | 0.5 | | | | | 86.2 | 86.7 |
| 4-5 | | | 1 | | | | | 86.6 | 86.5 |
| 4-6 | | | 7 | | | | | 87.3 | 86.3 |
| 4-7 | | | 10 | | | | | 87.3 | 85.8 |
| 4-8 | | | 15 | | | | | 86.5 | 84.7 |
| 4-9 | | | 20 | | | | | 85 | 82 |
| 4-10 | | | 25 30 | | | | | 84 | 77 |
| 4-11 | | | | | | | | 83 | 71 |

In the case where D50 was from 0.1 µm to 20 µm both inclusive, higher initial efficiency and a higher capacity retention ratio were obtained.

### (Examples 5-1 to 5-12)

Secondary batteries were fabricated by a procedure similar to that of Example 1-5 except that the average coverage ratio and the average thickness of the covering section were changed as illustrated in Table 5, and the various characteristics were examined. In this case, at the time of forming the coverage section, the average coverage rate was adjusted by changing input electricity and deposition time, and the average thickness was adjusted by changing deposition speed and deposition time.

**[Table 5]**

| Example | Core section (highly-crystalline) | | Covering section (noncrystalline) | | | | Initial efficiency (%) | Capacity retention ratio (%) |
|---|---|---|---|---|---|---|---|---|
| | Type | X | Type | y | Average thickness (nm) | Average coverage ratio (%) | | |
| 5-1 | SiOₓ | 0.1 | SiO_{y} | 1.2 | 1 | 80 | 89 | 82 |
| 5-2 | | | | | 10 | | 88 | 83 |
| 5-3 | | | | | 100 | | 87.5 | 85 |
| 5-4 | | | | | 500 | | 85 | 87 |
| 5-5 | | | | | 1000 | | 83 | 88 |
| 5-6 | | | | | 2000 | | 81 | 88.5 |
| 5-7 | | | | | 3000 | | 80 | 89 |
| 5-8 | | | | | 5000 | | 75 | 89 |
| 5-9 | SiOₓ | 0.1 | SiO_{y} | 1.2 | 200 | 20 | 89 | 79 |
| 5-10 | | | | | | 30 | 88 | 81 |
| 5-11 | | | | | | 50 | 87.5 | 86 |
| 5-12 | | | | | | 100 | 86.5 | 86.7 |

In the case where the average coverage ratio was from 30% to 100% both inclusive, a higher capacity retention ratio was obtained. In the case where the average thickness was from 1 nm to 3000 nm both inclusive, higher initial efficiency was obtained.

### (Examples 6-1 to 6-18)

Secondary batteries were fabricated by a procedure similar to that of Example 1-5 except that crystallinity of the covering section was changed as illustrated in Table 6, and the various characteristics were examined. In this case, SiO_{y} was deposited on heating in Ar gas atmosphere to form a low-crystalline covering section. Physical properties (the average area occupancy, the average grain diameter, and magnitude relation) of the covering section were adjusted as illustrated in Table 6 by adjusting temperature and time on heating. The term "magnitude relation" refers to magnitude relation between the average area occupancy and the average grain diameter in the inner section and the average area occupancy and the average grain diameter in the outer section when the covering section is divided into two equal parts in a thickness direction.

**[Table 6]**

| Example | Core section (highly-crystalline) | | Covering section (low-crystalline) | | | | | | | Initial efficiency (%) | Capacity retention ratio (%) |
|---|---|---|---|---|---|---|---|---|---|---|---|
| | Type | X | Type | y | Average thickness (nm) | Average coverage ratio (%) | Average area occupancy (%) | Average grain diameter (nm) | Magnitude relation | | |
| 6-1 | SiOₓ | 0.1 | SiO_{y} | 1.2 | 200 | 80 | 0.5 | 1.5 | Inner side≥outer side | 87 | 86.5 |
| 6-2 | | | | | | | 1 | 3 | | 87 | 86.5 |
| 6-3 | | | | | | | 2 | 10 | | 87 | 86.5 |
| 6-4 | | | | | | | 3.5 | 12.5 | | 87 | 86.5 |
| 6-5 | | | | | | | 5 | 14 | | 87.2 | 86.5 |
| 6-6 | | | | | | | 7.5 | 15.5 | | 87.3 | 86.5 |
| 6-7 | | | | | | | 10 | 17.5 | | 87.5 | 86.5 |
| 6-8 | | | | | | | 15 | 20 | | 87.8 | 86.4 |
| 6-9 | | | | | | | 20 | 22 | | 88 | 86.2 |
| 6-10 | | | | | | | 25 | 25 | | 88.5 | 85 |
| 6-11 | | | | | | | 30 | 27.5 | | 89 | 84.3 |
| 6-12 | | | | | | | 35 | 30.5 | | 89.5 | 84.1 |
| 6-13 | | | | | | | 35 | 41.5 | | 89.8 | 83.9 |
| 6-14 | | | | | | | 35 | 50 | | 89.9 | 82 |
| 6-15 | | | | | | | 35 | 55 | | 89.9 | 79 |
| 6-16 | | | | | | | 40 | 33 | | 89.7 | 77 |
| 6-17 | | | | | | | 45 | 36 | | 90 | 75 |
| 6-18 | | | | | | | 50 | 38.5 | | 90 | 74 |

In the case where the average area occupancy was equal to or less than 35%, the average grain diameter was equal to or less than 50 nm, and the magnitude relation between the average area occupancy and the average grain diameter in the inner section and the average area occupancy and the average grain diameter in the outer section was inner side≥outer side, a higher capacity retention ratio was obtained.

### (Examples 7-1 to 7-12)

Secondary batteries were fabricated by a procedure similar to that of Example 1-5 except that the carbon-containing layer was formed on the surface of the anode active material as illustrated in Table 7, and the various characteristics were examined. The formation procedure of the carbon-containing layer was similar to the formation procedure of the carbon-containing material. In this case, by adjusting pressure at the time of heat decomposition as necessary, voids of the covering section were filled with part of the carbon-containing layer instead of the carbon-containing material, and the voids were sealed with part of the carbon-containing layer.

**[Table 7]**

| Example | Core section (highly-cryst alline) | | Covering section (noncrystallin e) | | Carbon-containing layer | | | Initial efficiency (%) | Capacity retention ratio (%) |
|---|---|---|---|---|---|---|---|---|---|
| | Type | X | Type | y | Average thickness (nm) | Average coverage ratio (%) | Sealing of voids | | |
| 7-1 | SiOₓ | 0.1 | SiO_{y} | 1.2 | 50 | 80 | Absent | 86 | 86 |
| 7-2 | | | | | 5 | | Present | 86.5 | 86.2 |
| 7-3 | | | | | 30 | | | 86.7 | 86.4 |
| 7-4 | | | | | 50 | | | 87 | 86.5 |
| 7-5 | | | | | 100 | | | 87 | 86.5 |
| 7-6 | | | | | 200 | | | 87 | 86.5 |
| 7-7 | | | | | 500 | | | 87 | 86.5 |
| 7-8 | | | | | 800 | | | 87 | 86.5 |
| 7-9 | SiOₓ | 0.1 | SiO_{y} | 1.2 | 50 | 20 | Present | 86 | 86.5 |
| 7-10 | | | | | | 30 | | 86.3 | 86.5 |
| 7-11 | | | | | | 50 | | 86.5 | 86.5 |
| 7-12 | | | | | | 100 | | 87.3 | 86.5 |

In the case where the carbon-containing layer was formed, the initial efficiency and the capacity retention ratio were further increased. In this case, in the case where the average thickness was equal to or less than 500 nm, and the average coverage ratio was from 30% to 100% both inclusive, higher initial efficiency and a higher capacity retention ratio were obtained, and a higher battery capacity was obtained.

### (Examples 8-1 to 8-17 and 9-1 to 9-5)

Secondary batteries were fabricated by a procedure similar to that of Example 1-5 except that a metal element was contained in the core section and the covering section as illustrated in Table 8 and Table 9, and the various characteristics were examined. In this case, as raw materials, SiOₓ powder and metal powder were used and co-evaporated.

**[Table 8]**

| Example | Core section (highly-crystalline) | | | | Covering section (noncrystalline) | | Initial efficiency (%) | Capacity retention ratio (%) |
|---|---|---|---|---|---|---|---|---|
| | Type | X | Metal element | | Type | y | | |
| | | | Type | Content (wt%) | | | | |
| 8-1 | SiOₓ | 0.1 | Fe | 0.01 | SiO_{y} | 1.2 | 87 | 86.6 |
| 8-2 | | | | 0.1 | | | 87 | 86.7 |
| 8-3 | | | | 0.2 | | | 87 | 86.8 |
| 8-4 | | | | 0.5 | | | 87 | 86.9 |
| 8-5 | | | | 1 | | | 87.1 | 87 |
| 8-6 | | | | 2 | | | 87.2 | 87 |
| 8-7 | | | | 5 | | | 87.3 | 87 |
| 8-8 | | | | 7.5 | | | 87.4 | 87 |
| 8-9 | | | Fe+Al | 0.4+0.3 | | | 87.5 | 86.5 |
| 8-10 | | | Fe+Al+Ca | 0.4+0.2+0.1 | | | 87.4 | 86.6 |
| 8-11 | | | Fe+Al+Mn | 0.4+0.2+0.1 | | | 87.5 | 86.7 |
| 8-12 | | | Fe+Al+Ca | 0.2+0.07+0.02 | | | 87.4 | 86.5 |
| 8-13 | | | Fe+Al+Ca | 0.23+0.08+0.02 | | | 87.5 | 86.6 |
| 8-14 | | | Fe+Mn | 0.4+0.3 | | | 87.4 | 86.5 |
| 8-15 | | | Fe+Cr | 0.4+0.3 | | | 87.3 | 86.6 |
| 8-16 | | | Fe+Mg | 0.4+0.3 | | | 87.7 | 86.7 |
| 8-17 | | | Fe+Ni | 0.4+0.3 | | | 87.8 | 86.6 |

**[Table 9]**

| Example | Core section (highly-crystalline) | | Covering section (noncrystalline) | | | | Initial efficiency (%) | Capacity retention ratio (%) |
|---|---|---|---|---|---|---|---|---|
| | Type | X | Type | y | Metal element | | | |
| | | | | | Type | Content (wt%) | | |
| 9-1 | SiOₓ | 0.1 | SiO_{y} | 1.2 | F | 0.01 | 87.5 | 86.5 |
| 9-2 | | | | | Al | 0.01 | 87.4 | 86.5 |
| 9-3 | | | | | Ca | 0.01 | 87.3 | 86.5 |
| 9-4 | | | | | Fe+Al | 0.05+0.01 | 87.7 | 86.5 |
| 9-5 | | | | | Fe+Al+Ca | 0.05+0.01+0.01 | 87.8 | 86.5 |

In the case where the metal element was contained in the core section and the covering section, the initial efficiency and the capacity retention ratio were further increased. In particular, in the case where Fe was contained in the core section, and the Fe content was from 0.1 wt% to 7.5 wt% both inclusive, a high cycle retention ratio and high initial efficiency were obtained.

### (Examples 10-1 to 10-3)

Secondary batteries were fabricated by a procedure similar to that of Example 1-5 except that C and S were contained in the anode current collector 54A as illustrated in Table 10, and the various characteristics were examined. In this case, as the anode current collector 54A, a rolled Cu foil containing C and S was used.

**[Table 10]**

| Example | Anode current collector | Core section (highly-crystalline) | | Covering section (noncrystalline) | | Initial efficiency (%) | Capacity retention ratio (%) |
|---|---|---|---|---|---|---|---|
| | Content of C and S (ppm) | Type | X | Type | y | | |
| 10-1 | 50 | SiOₓ | 0.1 | SiO_{y} | 1.2 | 87 | 86.9 |
| 10-2 | 100 | | | | | 87 | 86.9 |
| 10-3 | 200 | | | | | 87 | 86.8 |

In the case where the anode current collector 54A contained C and S, the initial efficiency and the capacity retention ratio were further increased. In this case, in the case where the content of C and S was equal to or less than 100 ppm, a higher capacity retention ratio was obtained.

### (Examples 11-1 to 11-9)

Secondary batteries were fabricated by a procedure similar to that of Example 1-5 except that the type of the anode binder was changed as illustrated in Table 11, and the various characteristics were examined. In this case, as an anode binder, polyimide (PI), polyvinylidene fluoride (PVDF), polyamide (PA), polyacrylic acid (PAA), lithium polyacrylate (PAAL), polyimide carbide (PI carbide), polyethylene (PE), polymaleic acid (PMA), and aramid (AR) were used. It is to be noted that when PAA, PAAL, or the like was used, anode mixture slurry was prepared with the use of 17 volume % aqueous solution in which any of PAA, PAAL, and the like was dissolved, the resultant anode mixture slurry was thermally pressed to form the anode active material layer 54B without firing.

**[Table 11]**

| Example | Anode binder | Core section (highly-crystalline) | | Covering section (noncrystalline) | | Initial efficiency (%) | Capacity retention ratio (%) |
|---|---|---|---|---|---|---|---|
| | | Type | X | Type | y | | |
| 11-1 | PI | SiOₓ | 0.1 | SiO_{y} | 1.2 | 86.5 | 87 |
| 11-2 | PIDF | | | | | 87 | 86 |
| 11-3 | PA | | | | | 86.5 | 86.3 |
| 11-4 | PAA | | | | | 87 | 86 |
| 11-5 | PAAL | | | | | 87.5 | 86 |
| 11-6 | PI carbide | | | | | 87.5 | 87 |
| 11-7 | PE | | | | | 87 | 86.5 |
| 11-8 | PMA | | | | | 87 | 86 |
| 11-9 | AR | | | | | 87 | 86.5 |

In the case where the type of the anode binder was changed, high initial efficiency and a high capacity retention ratio were obtained.

### (Examples 12-1 to 12-12)

Secondary batteries were fabricated by a procedure similar to that of Example 1-5 except that the type of the cathode active material was changed as illustrated in Table 12, and the various characteristics were examined.

**[Table 12]**

| Example | Cathode active material | Core section (highly-cryst alline) | | Covering section (noncrystalline) | | Initial efficiency (%) | Capacity retention ratio (%) |
|---|---|---|---|---|---|---|---|
| | | Type | X | Type | y | | |
| 12-1 | LiNi_{0.70}Co_{0.25}Al_{0.05}O₂ | SiOₓ | 0.1 | SiO_{y} | 1.2 | 87.1 | 86.7 |
| 12-2 | LiNi_{0.79}Co_{0.14}Al_{0.07}O₂ | | | | | 87.2 | 86.8 |
| 12-3 | LiNi_{0.70}Co_{0.25}Mg_{0.05}O₂ | | | | | 87.2 | 86.8 |
| 12-4 | LiNi_{0.70}Co_{0.25}Fe_{0.05}O₂ | | | | | 87.1 | 86.7 |
| 12-5 | LiNiO₂ | | | | | 87.2 | 86.8 |
| 12-6 | LiNi_{0.33}Co_{0.33}Mn_{0.33}O₂ | | | | | 87.1 | 86.8 |
| 12-7 | LiNi_{0.13}Co_{0.60}Mn_{0.27}O₂ | | | | | 87.1 | 86.8 |
| 12-8 | Li_{1.13}[Ni_{0.22}Co_{0.18}Mn_{0.60}]_{0.87}O₂ | | | | | 87.1 | 86.7 |
| 12-9 | Li_{1.13}[Ni_{0.20}Co_{0.20}Mn_{0.60}]_{0.87}O₂ | | | | | 87.2 | 86.8 |
| 12-10 | Li_{1.13}[Ni_{0.18}Co_{0.22}Mn_{0.60}]_{0.87}O₂ | | | | | 87.1 | 86.8 |
| 12-11 | Li_{1.13}[Ni_{0.25}Co_{0.25}Mn_{0.50}]_{0.87}O₂ | | | | | 87.2 | 86.8 |
| 12-12 | Li₂Ni_{0.40}Cu_{0.60}O₂ | | | | | 87.1 | 86.6 |

In the case where the type of the cathode active material was changed, high initial efficiency and a high capacity retention ratio were obtained.

From the results of Table 1 to Table 12, in the case where the anode active material contained the core section and the covering section having the foregoing compositions, and the carbon-containing material was provided in the voids of the covering section, superior initial charge-discharge characteristics and superior cycle characteristics were obtained.

The present technology has been described with reference to the embodiment and Examples. However, the present technology is not limited to the examples described in the embodiment and Examples, and various modifications may be made. For example, the secondary battery of the present technology is similarly applicable to a secondary battery in which the anode capacity includes a capacity by inserting and extracting lithium ions and a capacity associated with precipitation and dissolution of lithium metal, and the battery capacity is expressed by the sum of these capacities. In this case, an anode material capable of inserting and extracting lithium ions is used, and the chargeable capacity of the anode material is set to a smaller value than the discharging capacity of the cathode.

Further, for example, the secondary battery of the present technology is similarly applicable to a battery having other battery structure such as a coin-type battery and a button-type battery and a battery in which the battery element has other structure such as a laminated structure.

Further, for example, the electrode reactant may be other Group 1 element such as Na and K, a Group 2 element such as Mg and Ca, or other light metal such as Al. The effect of the present technology may be obtained without depending on the electrode reactant type, and therefore, even if the electrode reactant type is changed, a similar effect is obtainable.

Further, in the embodiment and Examples, with regard to the atom ratios x and y of the core section and the covering section, the appropriate ranges derived from the results of Examples have been described. However, such description does not totally deny possibility that the atom ratios x and y would be out of the foregoing ranges. That is, the foregoing appropriate ranges are particularly preferable ranges for obtaining the effects of the present technology. Therefore, as long as the effects of the present technology are obtained, the atom ratios x and y may be somewhat out of the foregoing ranges. The same is applicable to the ratio IG/ID, the void diameter of the covering section, and the like.

It is possible to achieve at least the following configurations from the above-described example embodiment of the technology.
(1) A secondary battery including:
   a cathode;
   an anode including an active material; and
   an electrolytic solution, wherein
   the active material includes a core section and a covering section, the core section being capable of inserting and extracting lithium ions, and the covering section being provided in at least part of a surface of the core section and being a low-crystalline or a noncrystalline,
   the core section includes Si and O as constituent elements, and an atom ratio x (O/Si) of O with respect to Si satisfies 0≤x<0.5,
   the covering section includes Si and O as constituent elements, and an atom ratio y (O/Si) of O with respect to Si satisfies 0.5≤y≤1.8, and
   the covering section has voids, and a carbon-containing material is provided in at least part of the voids.
(2) The secondary battery according to (1), wherein a ratio IG/ID between a G band peak intensity IG and a D band peak intensity ID of the carbon-containing material measured by Raman spectrum method is from 0.3 to 3 both inclusive.
(3) The secondary battery according to (1) or (2), wherein a void diameter of a maximum peak in a void distribution of the covering section that is measured by a nitrogen absorption method and a mercury intrusion method is equal to or less than 500 nanometers.
(4) The secondary battery according to any one of (1) to (3), wherein the covering section has a multilayer structure.
(5) The secondary battery according to any one of (1) to (4), wherein
   a carbon-containing layer is provided in at least part of a surface of the active material,
   an average thickness of the carbon-containing layer is equal to or less than 500 nanometers, and
   an average coverage ratio of the carbon-containing layer with respect to the active material is equal to or larger than 30 percents.
(6) The secondary battery according to any one of (1) to (5), wherein
   a median diameter (D50) of the core section is from 0.1 micrometers to 20 micrometers both inclusive,
   an average thickness of the covering section is from 1 nanometer to 3000 nanometers both inclusive, and
   an average coverage ratio of the covering section with respect to the core section is equal to or larger than 30 percents.
(7) The secondary battery according to any one of (1) to (6), wherein crystallinity of the covering section is lower than crystallinity of the core section.
(8) The secondary battery according to any one of (1) to (7), wherein the covering section has a low-crystalline state including a noncrystalline region and a crystal region (crystal grains), and the crystal grains are scattered in the noncrystalline region.
(9) The secondary battery according to (8), wherein
   an average area occupancy of the crystal grains attributable to a (111) plane and a (220) plane of Si is equal to or less than 35 percents, and an average grain diameter of the crystal grains is equal to or less than 50 nanometers,
   when the covering section is divided into two equal parts in a thickness direction, an average area occupancy and an average grain diameter in an inner section of the crystal grains attributable to the (111) plane and the (220) plane of Si are the same as or larger than an average area occupancy and an average grain diameter in an outer section of the crystal grains attributable to the (111) plane and the (220) plane of Si.
(10) The secondary battery according to any one of (1) to (7), wherein the covering section is noncrystalline.
(11) The secondary battery according to any one of (1) to (10), wherein
   the core section includes Fe as a constituent element, and
   a ratio (Fe/(Si+O)) of Fe with respect to Si and O is from 0.01 weight percent to 7.5 weight percent both inclusive.
(12) The secondary battery according to any one of (1) to (10), wherein
   the core section includes at least one of Fe, Al, Ca, Mn, Cr, Mg, and Ni as constituent elements, and
   the covering section includes at least one of Fe, Al, and Ca as constituent elements.
(13) The secondary battery according to any one of (1) to (12), wherein
   the anode has an active material layer on a current collector, and the active material layer includes the active material, and
   the current collector includes C and S as constituent elements, and a content of C and S is equal to or less than 100 parts per million.
(14) A secondary battery-use electrode including an active material, wherein,
   the active material includes a core section and a covering section, the core section being capable of inserting and extracting lithium ions, and covering section being provided in at least part of a surface of the core section and being a low-crystalline or a noncrystalline,
   the core section includes Si and O as constituent elements, and an atom ratio x (O/Si) of O with respect to Si satisfies 0≤x<0.5,
   the covering section includes Si and O as constituent elements, and an atom ratio y (O/Si) of O with respect to Si satisfies 0.5≤y≤1.8, and
   the covering section has voids, and a carbon-containing material is provided in at least part of the voids.
(15) A secondary battery-use active material including:
   a core section capable of inserting and extracting lithium ions; and
   a covering section provided in at least part of a surface of the core section and being a low-crystalline or a noncrystalline, wherein
   the core section includes Si and O as constituent elements, and an atom ratio x (O/Si) of O with respect to Si satisfies 0≤x<0.5,
   the covering section includes Si and O as constituent elements, and an atom ratio y (O/Si) of O with respect to Si satisfies 0.5≤y≤1.8, and
   the covering section has voids, and a carbon-containing material is provided in at least part of the voids.
(16) A battery pack including:
   the secondary battery according to any one of (1) to (13);
   a control section to control a usage state of the secondary battery; and
   a switch section to switch the usage state of the secondary battery according to an instruction of the control section.
(17) An electric vehicle including:
   the secondary battery according to any one of (1) to (13);
   a conversion section to convert electric power supplied from the secondary battery into drive power;
   a drive section to operate according to the drive power; and
   a control section to control an usage state of the secondary battery.
(18) An electric power storage system including:
   the secondary battery according to any one of (1) to (13);
   one or more electric devices to be supplied with electric power from the secondary battery; and
   a control section to control the supplying of the electric power from the secondary battery to the one or more electric devices.
(19) An electric power tool including:
   the secondary battery according to any one of (1) to (13); and
   a movable section to be supplied with electric power from the secondary battery.
(20) An electronic apparatus including the secondary battery according to any one of (1) to (13) as an electric power supply source.

The present application contains subject matter related to that disclosed in Japanese Priority Patent Application JP 2011-278527 filed in the Japan Patent Office on December 20, 2011.

It should be understood by those skilled in the art that various modifications, combinations, sub-combinations and alternations may occur depending on design requirements and other factors insofar as they are within the scope of the invention as defined by the claims.

## Claims

1. A secondary battery-use active material (200) comprising:
a core section (201) capable of inserting and extracting lithium ions; and
a covering section (202) provided in at least part of a surface of the core section (201) and being a low-crystalline or a noncrystalline, wherein
the core section (201) includes Si and O as constituent elements, and an atom ratio x, O/Si, of O with respect to Si satisfies 0 ≤ x < 0.5,
the covering section (202) includes Si and O as constituent elements, and an atom ratio y, O/Si, of O with respect to Si satisfies 0.5 ≤ y ≤ 1.8, and
the covering section (202) has voids, and a carbon-containing material is provided in at least part of the voids **characterized in that**
a ratio IG/ID between a G band peak intensity IG and a D band peak intensity ID of the carbon containing material measured by Raman spectrum method is from 0.3 to 3 both inclusive.

2. A secondary battery comprising:
a cathode (21);
an anode (22) including an active material (200); and
an electrolytic solution, wherein
the active material (200) includes a core section (201) and a covering section (202), the core section being capable of inserting and extracting lithium ions, and the covering section (202) being provided in at least part of a surface of the core section (201) and being a low-crystalline or a noncrystalline,
the core section (201) includes Si and O as constituent elements, and an atom ratio x, O/Si, of O with respect to Si satisfies 0 ≤ x < 0.5,
the covering section (202) includes Si and O as constituent elements, and an atom ratio y, O/Si, of O with respect to Si satisfies 0.5 ≤ y ≤ 1.8, and
the covering section (202) has voids, and a carbon-containing material is provided in at least part of the voids, **characterized in that**
a ratio IG/ID between a G band peak intensity IG and a D band peak intensity ID of the carbon-containing material measured by Raman spectrum method is from 0.3 to 3 both inclusive.

3. The secondary battery according to claim 1, wherein a void diameter of a maximum peak in a void distribution of the covering section (202) that is measured by a nitrogen absorption method and a mercury intrusion method is equal to or less than 500 nanometers.

4. The secondary battery according to claim 1, wherein the covering section (202) has a multilayer structure.

5. The secondary battery according to claim 1, wherein
a carbon-containing layer is provided in at least part of a surface of the active material,
an average thickness of the carbon-containing layer is equal to or less than 500 nanometers, and
an average coverage ratio of the carbon-containing layer with respect to the active material (200) is equal to or larger than 30 percents.

6. The secondary battery according to claim 1, wherein
a median diameter, D50, of the core section (201) is from 0.1 micrometers to 20 micrometers both inclusive,
an average thickness of the covering section (202) is from 1 nanometer to 3000 nanometers both inclusive, and
an average coverage ratio of the covering section (202) with respect to the core section (201) is equal to or larger than 30 percents.

7. The secondary battery according to claim 1, wherein crystallinity of the covering section (202) is lower than crystallinity of the core section (201).

8. The secondary battery according to claim 1, wherein the covering section (202) has a low-crystalline state including a noncrystalline region and a crystal region, crystal grains, and the crystal grains are scattered in the noncrystalline region.

9. The secondary battery according to claim 8, wherein
an average area occupancy of the crystal grains attributable to a 111 plane and a 220 plane of Si is equal to or less than 35 percents, and an average grain diameter of the crystal grains is equal to or less than 50 nanometers,
when the covering section (202) is divided into two equal parts in a thickness direction, an average area occupancy and an average grain diameter in an inner section of the crystal grains attributable to the 111 plane and the 220 plane of Si are the same as or larger than an average area occupancy and an average grain diameter in an outer section of the crystal grains attributable to the 111 plane and the 220 plane of Si.

10. The secondary battery according to claim 1, wherein the covering section (202) is noncrystalline.

11. The secondary battery according to claim 1, wherein
the core section (201) includes Fe as a constituent element, and
a ratio Fe/Si+O of Fe with respect to Si and O is from 0.01 weight percent to 7.5 weight percent both inclusive.

12. The secondary battery according to claim 1, wherein
the core section (201) includes at least one of Fe, Al, Ca, Mn, Cr, Mg, and Ni as constituent elements, and
the covering section (202) includes at least one of Fe, Al, and Ca as constituent elements.

13. The secondary battery according to claim 1, wherein
the anode (22) has an active material layer (2) on a current collector (1), and the active material layer (2) includes the active material (200), and
the current collector (1) includes C and S as constituent elements, and a content of C and S is equal to or less than 100 parts per million.

14. An electronic apparatus comprising a secondary battery as an electric power supply source, wherein
the secondary battery includes a cathode (21), an anode (22) including an active material (200), and an electrolytic solution,
the active material (200) includes a core section (201) and a covering section (202), the core section (201) being capable of inserting and extracting lithium ions, and the covering section (202) being provided in at least part of a surface of the core section (201) and being a low-crystalline or a noncrystalline,
the core section (201) includes Si and O as constituent elements, and an atom ratio x, O/Si, of O with respect to Si satisfies 0 ≤ x < 0.5,
the covering section (202) includes Si and O as constituent elements, and an atom ratio y, O/Si, of O with respect to Si satisfies 0.5 ≤ y ≤ 1.8, and
the covering section (202) has voids, and a carbon-containing material is provided in at least part of the voids. **characterized in that**
a ratio IG/ID between a G band peak intensity IG and a D band peak intensity ID of the carbon containing material measured by Raman spectrum method is from 0.3 to 3 both inclusive.

## Patentansprüche

1. Aktivmaterial (200) zur Verwendung für Sekundärbatterien, umfassend:
einen Kernabschnitt (201), der Lithiumionen einführen und extrahieren kann; und
einen Abdeckabschnitt (202), der in mindestens einem Teil einer Oberfläche des Kernabschnitts (201) bereitgestellt wird und niedrigkristallin oder nichtkristallin ist, wobei
der Kernabschnitt (201) Si und O als konstituierende Elemente einschließt und ein Atomverhältnis x, O/Si, von O in Bezug auf Si von 0 ≤ x < 0,5 erfüllt,
der Abdeckabschnitt (202) Si und O als konstituierende Elemente einschließt und ein Atomverhältnis y, O/Si, von O in Bezug auf Si von 0,5 ≤ y ≤ 1,8 erfüllt,
der Abdeckabschnitt (202) Leerstellen aufweist und ein kohlenstoffhaltiges Material in mindestens einem Teil der Leerstellen bereitgestellt wird,
**dadurch gekennzeichnet, dass**
ein Verhältnis IG/ID zwischen einer Peakintensität der G-Bande IG und einer Peakintensität der D-Bande ID des kohlenstoffhaltigen Materials, gemessen mittels Raman-Spektroskopie, 0,3 bis 3 beträgt, beide einschließlich.

2. Sekundärbatterie, umfassend:
eine Kathode (21);
eine Anode (22), die ein Aktivmaterial (200) einschließt; und
eine Elektrolytlösung, wobei
das Aktivmaterial (200) einen Kernabschnitt (201) und einen Abdeckabschnitt (202) einschließt, wobei der Kernabschnitt in der Lage ist, Lithiumionen einzuführen und zu extrahieren, und der Abdeckabschnitt (202) in mindestens einem Teil einer Oberfläche des Kernabschnitts (201) bereitgestellt wird und niedrigkristallin oder nichtkristallin ist,
der Kernabschnitt (201) Si und O als konstituierende Elemente einschließt und ein Atomverhältnis x, O/Si, von O in Bezug auf Si von 0 ≤ x < 0,5 erfüllt,
der Abdeckabschnitt (202) Si und O als konstituierende Elemente einschließt und ein Atomverhältnis y, O/Si, von O in Bezug auf Si von 0,5 ≤ y ≤ 1,8 erfüllt,
der Abdeckabschnitt (202) Leerstellen aufweist und ein kohlenstoffhaltiges Material in mindestens einem Teil der Leerstellen bereitgestellt wird,
**dadurch gekennzeichnet, dass**
ein Verhältnis IG/ID zwischen einer Peakintensität der G-Bande IG und einer Peakintensität der D-Bande ID des kohlenstoffhaltigen Materials, gemessen mittels Raman-Spektroskopie, 0,3 bis 3 beträgt, beide einschließlich.

3. Sekundärbatterie nach Anspruch 1, wobei ein Leerstellendurchmesser des Maximalpeaks in einer Leerstellenverteilung des Abdeckabschnitts (202), der nach einem Stickstoffabsorptionsverfahren und einem Quecksilberintrusionsverfahren gemessen wird, gleich oder kleiner als 500 Nanometer ist.

4. Sekundärbatterie nach Anspruch 1, wobei der Abdeckabschnitt (202) eine Mehrschichtstruktur aufweist.

5. Sekundärbatterie nach Anspruch 1, wobei
in mindestens einem Teil einer Oberfläche des Aktivmaterials eine kohlenstoffhaltige Schicht bereitgestellt wird,
eine durchschnittliche Dicke der kohlenstoffhaltigen Schicht gleich oder kleiner als 500 Nanometer ist, und
ein durchschnittlicher Abdeckungsgrad der kohlenstoffhaltigen Schicht in Bezug auf das Aktivmaterial (200) gleich oder größer als 30 Prozent ist.

6. Sekundärbatterie nach Anspruch 1, wobei
ein Mediandurchmesser, D50, des Kernabschnitts (201) 0,1 Mikrometer bis 20 Mikrometer beträgt, beide einschließlich,
eine durchschnittliche Dicke des Abdeckabschnitts (202) 1 Nanometer bis 3000 Nanometer beträgt, beide einschließlich, und
ein durchschnittlicher Abdeckungsgrad des Abdeckabschnitts (202) in Bezug auf den Kernabschnitt (201) gleich oder größer als 30 Prozent ist.

7. Sekundärbatterie nach Anspruch 1, wobei die Kristallinität des Abdeckabschnitts (202) niedriger als die Kristallinität des Kernabschnitts (201) ist.

8. Sekundärbatterie nach Anspruch 1, wobei der Abdeckabschnitt (202) einen niedrigkristallinen Zustand einschließlich einer nichtkristallinen Region und einer Kristallregion, Kristallkörnern, aufweist und die Kristallkörner in der nichtkristallinen Region verstreut sind.

9. Sekundärbatterie nach Anspruch 8, wobei
eine durchschnittliche Flächenbelegung der Kristallkörner, zurückführbar auf eine 111-Ebene und eine 220-Ebene von Si, gleich oder kleiner als 35 Prozent ist, und ein durchschnittlicher Korndurchmesser der Kristallkörner gleich oder kleiner als 50 Nanometer ist,
wobei der Abdeckabschnitt (202) in einer Dickenrichtung in zwei gleiche Teile unterteilt ist, eine durchschnittliche Flächenbelegung und ein durchschnittlicher Korndurchmesser in einem Innenabschnitt der Kristallkörner, zurückführbar auf die 111-Ebene und die 220-Ebene von Si, gleich oder größer als eine durchschnittliche Flächenbelegung und ein durchschnittlicher Korndurchmesser in einem Außenabschnitt der Kristallkörner, zurückführbar auf die 111-Ebene und die 220-Ebene von Si, sind.

10. Sekundärbatterie nach Anspruch 1, wobei der Abdeckabschnitt (202) nichtkristallin ist.

11. Sekundärbatterie nach Anspruch 1, wobei
der Kernabschnitt (201) Fe als konstituierendes Element einschließt, und
ein Verhältnis Fe/Si+O von Fe in Bezug auf Si und O 0,01 Gew.% bis 7,5 Gew.% beträgt, beide einschließlich.

12. Sekundärbatterie nach Anspruch 1, wobei
der Kernabschnitt (201) mindestens eines von Fe, Al, Ca, Mn, Cr, Mg und Ni als konstituierende Elemente einschließt, und
der Abdeckabschnitt (202) mindestens eines von Fe, Al und Ca als konstituierende Elemente einschließt.

13. Sekundärbatterie nach Anspruch 1, wobei
die Anode (22) eine Aktivmaterialschicht (2) auf einem Stromabnehmer (1) aufweist und die Aktivmaterialschicht (2) das Aktivmaterial (200) einschließt, und
der Stromabnehmer (1) C und S als konstituierende Elemente einschließt und ein Gehalt an C und S gleich oder kleiner als 100 ppm ist.

14. Elektronischer Apparat, umfassend eine Sekundärbatterie als Quelle für die elektrische Stromversorgung, wobei
die Sekundärbatterie eine Kathode (21), eine Anode (22), die ein Aktivmaterial (200) einschließt, und eine Elektrolytlösung einschließt,
das Aktivmaterial (200) einen Kernabschnitt (201) und einen Abdeckabschnitt (202) einschließt, wobei der Kernabschnitt (201) in der Lage ist, Lithiumionen einzuführen und zu extrahieren, und der Abdeckabschnitt (202) in mindestens einem Teil einer Oberfläche des Kernabschnitts (201) bereitgestellt wird und niedrigkristallin oder nichtkristallin ist,
der Kernabschnitt (201) Si und O als konstituierende Elemente einschließt und ein Atomverhältnis x, O/Si, von O in Bezug auf Si von 0 ≤ x < 0,5 erfüllt,
der Abdeckabschnitt (202) Si und O als konstituierende Elemente einschließt und ein Atomverhältnis y, O/Si, von O in Bezug auf Si von 0,5 ≤ y ≤ 1,8 erfüllt, und
der Abdeckabschnitt (202) Leerstellen aufweist und ein kohlenstoffhaltiges Material in mindestens einem Teil der Leerstellen bereitgestellt wird,
**dadurch gekennzeichnet, dass**
ein Verhältnis IG/ID zwischen einer Peakintensität der G-Bande IG und einer Peakintensität der D-Bande ID des kohlenstoffhaltigen Materials, gemessen mittels Raman-Spektroskopie, 0,3 bis 3 beträgt, beide einschließlich.

## Revendications

1. Matériau actif (200) à utiliser dans une batterie rechargeable, comprenant :
une section centrale (201) capable d'insérer et extraire des ions lithium ; et
une section de revêtement (202) disposée dans au moins une partie d'une surface de la section centrale (201) et étant faiblement cristalline ou non cristalline, dans lequel
la section centrale (201) comporte Si et O comme éléments constitutifs, et un rapport atomique x, O/Si, entre O et Si satisfait 0 ≤ x < 0,5,
la section de revêtement (202) comporte Si et O comme éléments constitutifs, et un rapport atomique y, O/Si, entre O et Si satisfait 0,5 ≤ y ≤ 1,8, et
la section de revêtement (202) a des vides, et un matériau contenant du carbone est disposé dans au moins une partie des vides, **caractérisé en ce que**
un rapport IG/ID entre une intensité maximale de bande G IG et une intensité maximale de bande D ID du matériau contenant du carbone mesurées par la méthode des spectres Raman est de 0,3 à 3, tous deux inclus.

2. Batterie rechargeable comprenant :
une cathode (21) ;
une anode (22) comportant un matériau actif (200) ; et
une solution électrolytique, dans laquelle
le matériau actif (200) comporte une section centrale (201) et une section de revêtement (202), la section centrale (201) étant capable d'insérer et extraire des ions lithium, et la section de revêtement (202) étant disposée dans au moins une partie d'une surface de la section centrale (201) et étant faiblement cristalline ou non cristalline,
la section centrale (201) comporte Si et O comme éléments constitutifs, et un rapport atomique x, O/Si, entre O et Si satisfait 0 ≤ x < 0,5,
la section de revêtement (202) comporte Si et O comme éléments constitutifs, et un rapport atomique y, O/Si, entre O et Si satisfait 0,5 ≤ y ≤ 1,8, et
la section de revêtement (202) a des vides, et un matériau contenant du carbone est disposé dans au moins une partie des vides, **caractérisée en ce que**
un rapport IG/ID entre une intensité maximale de bande G IG et une intensité maximale de bande D ID du matériau contenant du carbone mesurées par la méthode des spectres Raman est de 0,3 à 3, tous deux inclus.

3. Batterie rechargeable selon la revendication 1, dans laquelle un diamètre de vide d'un pic maximal dans une distribution de vides de la section de revêtement (202) qui est mesuré par une méthode d'absorption d'azote et une méthode d'intrusion de mercure est égal ou inférieur à 500 nanomètres.

4. Batterie rechargeable selon la revendication 1, dans laquelle la section de revêtement (202) a une structure multicouche.

5. Batterie rechargeable selon la revendication 1, dans laquelle
une couche contenant du carbone est disposée dans au moins une partie d'une surface du matériau actif,
une épaisseur moyenne de la couche contenant du carbone est égale ou inférieure à 500 nanomètres, et
un taux de recouvrement moyen de la couche contenant du carbone par rapport au matériau actif (200) est égal ou supérieur à 30 pour cent.

6. Batterie rechargeable selon la revendication 1, dans laquelle
un diamètre médian, D50, de la section centrale (201) est de 0,1 micromètre à 20 micromètres, tous deux inclus,
une épaisseur moyenne de la section de revêtement (202) est de 1 nanomètre à 3000 nanomètres, tous deux inclus, et
un taux de recouvrement moyen de la section de revêtement (202) par rapport à la section centrale (201) est égal ou supérieur à 30 pour cent.

7. Batterie rechargeable selon la revendication 1, dans laquelle la cristallinité de la section de revêtement (202) est inférieure à la cristallinité de la section centrale (201).

8. Batterie rechargeable selon la revendication 1, dans laquelle la section de revêtement (202) a un état faiblement cristallin comportant une région non cristalline et une région cristalline, des grains cristallins, et les grains cristallins sont diffusés dans la région non cristalline.

9. Batterie rechargeable selon la revendication 8, dans laquelle
un taux d'occupation surfacique moyen des grains cristallins imputable à un plan 111 et un plan 220 de Si est égal ou inférieur à 35 pour cent, et un diamètre moyen de grains des grains cristallins est égal ou inférieur à 50 nanomètres,
quand la section de revêtement (202) est divisée en deux parties égales dans la direction de l'épaisseur, un taux d'occupation surfacique moyen et un diamètre moyen de grains dans une section interne des grains cristallins imputables au plan 111 et au plan 220 de Si sont égaux ou supérieurs à un taux d'occupation surfacique moyen et un diamètre moyen de grains dans une section externe des grains cristallins imputables au plan 111 et au plan 220 de Si.

10. Batterie rechargeable selon la revendication 1, dans laquelle la section de revêtement (202) est non cristalline.

11. Batterie rechargeable selon la revendication 1, dans laquelle
la section centrale (201) comporte Fe comme élément constitutif, et
un rapport Fe/Si+O entre Fe, et Si et O est de 0,01 pour cent en poids à 7,5 pour cent en poids, tous deux inclus.

12. Batterie rechargeable selon la revendication 1, dans laquelle
la section centrale (201) comporte au moins un des éléments Fe, Al, Ca, Mn, Cr, Mg et Ni comme élément constitutif, et
la section de revêtement (202) comporte au moins un des éléments Fe, Al et Ca comme élément constitutif.

13. Batterie rechargeable selon la revendication 1, dans laquelle
l'anode (22) a une couche de matériau actif (2) sur un collecteur de courant (1), et la couche de matériau actif (2) comporte le matériau actif (200), et
le collecteur de courant (1) comporte C et S comme éléments constitutifs, et une teneur en C et S est égale ou inférieure à 100 parties par million.

14. Appareil électronique comprenant une batterie rechargeable comme source d'alimentation électrique, dans lequel
la batterie rechargeable comporte une cathode (21), une anode (22) comportant un matériau actif (200), et une solution électrolytique,
le matériau actif (200) comporte une section centrale (201) et une section de revêtement (202), la section centrale (201) étant capable d'insérer et extraire des ions lithium, et la section de revêtement (202) étant disposée dans au moins une partie d'une surface de la section centrale (201) et étant faiblement cristalline ou non cristalline,
la section centrale (201) comporte Si et O comme éléments constitutifs, et un rapport atomique x, O/Si, entre O et Si satisfait 0 ≤ x < 0,5,
la section de revêtement (202) comporte Si et O comme éléments constitutifs, et un rapport atomique y, O/Si, entre O et Si satisfait 0,5 ≤ y ≤ 1,8, et
la section de revêtement (202) a des vides, et un matériau contenant du carbone est disposé dans au moins une partie des vides, **caractérisée en ce que**
un rapport IG/ID entre une intensité maximale de bande G IG et une intensité maximale de bande D ID du matériau contenant du carbone mesurées par la méthode des spectres Raman est de 0,3 à 3, tous deux inclus.
